(19) Europäisches Patentamt
European Patent Office
Office européen des brevets

(11) **EP 4 374 447 B1**

(12) **EUROPEAN PATENT SPECIFICATION**

(45) Date of publication and mention
of the grant of the patent:
**18.06.2025 Bulletin 2025/25**

(21) Application number: **22747737.9**

(22) Date of filing: **22.07.2022**

(51) International Patent Classification (IPC):
$H01M\ 10/054^{(2010.01)}$   $H01M\ 10/44^{(2006.01)}$
$H01M\ 4/38^{(2006.01)}$   $H01M\ 4/131^{(2010.01)}$
$H01M\ 4/133^{(2010.01)}$

(52) Cooperative Patent Classification (CPC):
**H01M 10/054; H01M 4/381; H01M 10/44;
H01M 10/446;** H01M 4/131; H01M 4/133;
Y02E 60/10

(86) International application number:
**PCT/GB2022/051933**

(87) International publication number:
**WO 2023/002218 (26.01.2023 Gazette 2023/04)**

(54) **SODIUM-ION CELLS**

NATRIUM-IONEN-ZELLEN

PILES SODIUM-ION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.07.2021 GB 202110658**

(43) Date of publication of application:
**29.05.2024 Bulletin 2024/22**

(73) Proprietor: **Faradion Limited
Sheffield, South Yorkshire S1 4DP (GB)**

(72) Inventors:
• **BARKER, Jeremy**
  **Sheffield, South Yorkshire S1 4DP (GB)**
• **WRIGHT, Christopher John**
  **Sheffield, South Yorkshire S1 4DP (GB)**
• **RUDOLA, Ashish**
  **Sheffield, South Yorkshire S1 4DP (GB)**

(74) Representative: **The IP Asset Partnership Limited
Prama House
267 Banbury Road
Oxford OX2 7HT (GB)**

(56) References cited:
WO-A1-2016/027082

• **ZHOU QUAN ET AL: "Thermal Stability of High
Power 26650-Type Cylindrical Na-Ion Batteries",
vol. 38, no. 7, 3 July 2021 (2021-07-03), GB, pages
076501, XP055900183, ISSN: 0256-307X,
Retrieved from the Internet <URL:https://
iopscience.iop.org/article/10.1088/0256-307X/38/
7/076501/pdf> [retrieved on 20220311], DOI:
10.1088/0256-307X/38/7/076501**

# EP 4 374 447 B1

**Description**

FIELD OF THE INVENTION

The present invention relates to a process for providing sodium-ion cells and/or sodium-ion batteries, for example rechargeable sodium-ion cells and/or sodium-ion batteries, which are capable of being safely transported and/or stored. The invention also relates to energy storage devices that comprise one or more of these sodium-ion cells, such energy storage devices include for example, batteries, battery modules, battery packs, electrochemical devices and electrochromic devices.

BACKGROUND OF THE INVENTION

Sodium-ion batteries are analogous in many ways to the lithium-ion batteries that are in common use today; they are both reusable secondary batteries that comprise an anode (negative electrode), a cathode (positive electrode) and an electrolyte material, both are capable of storing energy, and they both charge and discharge via a similar reaction mechanism. When a sodium-ion (or lithium-ion) battery is charging, Na+ (or Li+) ions de-intercalate from the cathode and insert into the anode. Meanwhile charge balancing electrons pass from the cathode through the external circuit containing the charger and into the anode of the battery. During discharge the same process occurs but in the opposite direction.

Lithium-ion battery technology has enjoyed a lot of attention in recent years and provides the preferred portable battery for most electronic devices in use today; however, lithium is not a cheap metal to source and is considered too expensive for use in large scale applications. By contrast sodium-ion battery technology is still in its relative infancy but is seen as advantageous; sodium is much more abundant than lithium and some researchers predict this will provide a cheaper and more durable way to store energy into the future, particularly for large scale applications such as storing energy on the electrical grid. Nevertheless, a lot of work has yet to be done before sodium-ion batteries are a commercial reality.

International PCT Application published as WO 2016/027082 A1 discloses a process for making sodium-ion cells which are capable of safe storage and/or transportation. This is performed by discharging a charged/discharged sodium-ion cell in the range -0.1 to 1 Volts to thereby produce a sodium-ion cell that is in a state of charge (SOC) of from 0% to 20%. Whilst this process is clearly advantageous, it is somewhat limiting in the sense that discharging the charged/discharged sodium-ion cell is preferably done at a low C-rate (i.e. a rate of C/100 is the most preferred discharge rate).

For the avoidance of any doubt, the C-rate is the discharge current divided by the theoretical current draw under which the sodium-ion cell would deliver its nominal rated capacity in the specified period of hours.

In most circumstances, a commercial manufacturer does not want to wait 100 hours to prepare such a cell. On the other hand, a commercial manufacturer does not want to prepare a cell of inferior quality if they operate the process over a short period of time (i.e. less than 100 hours). In some cases, they do not want to operate a process that results in a negative effect on the electrochemical performance of the cell.

Therefore, one aim of the present invention is to provide a process for providing a sodium-ion cell and/or sodium-ion battery in a state of charge for example, from about 20% or less but which can be prepared in a relatively short time period of time (i.e. less than 100 hours) and which will preferably not result in a substantially negative effect on the electrochemical performance of the cell and/or battery. A negative effect may include, for instance, capacity fade with respect to the cell or battery's ability to be charged to its original charge capacity.

Another factor to consider is cell safety.

With respect to lithium-ion cells, the fundamental problem is that their transportation and/or storage is inherently hazardous because, in most cases, lithium-ion cells are not safe when i) stored in a fully discharged state; or ii) discharged down to 0 volts or close to 0 volts. This is because copper from the current collector for the anode (negative) electrode dissolves as copper ions into the electrolyte, and on subsequent recharge, the dissolved copper ions will then plate on internal surfaces of the cell to form electrically conductive pathways. This not only reduces the capacity of the cell, but also results in the formation of internal short circuits and subsequent thermal runaway of a lithium-ion cell.

Discharging a lithium-ion cell to 0V or close to 0V (even if the cell is not charged again) can have serious consequences as the internal microstructure of the cell is already compromised by that point. For instance, issues such as: internal shorting due to growth of metallic dendritic copper, a decrease in the mechanical integrity of the separator, a weakened anode adhesion to the copper current collector (due to the dissolution of the copper current collector during overdischarge), reduced porosities in the cathode, and blockage of electrochemical active sites on the cathode can not only result in rapid capacity loss, but also pose serious thermal hazards such as dangerous temperature spikes which can result in thermal runaway.

Understandably this is of major concern, particularly to airlines, and to reduce these safety concerns, in 2013 the International Civil Aviation Organisation introduced very stringent controls on the bulk air transportation of lithium-based cells and implemented rules to control both the size (watt hours rating and amount of lithium) of lithium-ion batteries that are permitted to be transported, as well as the number of batteries allowed in each consignment.

Therefore, the best-known way to handle lithium-ion battery cells is to avoid any storage condition at or close to 0 Volts by ensuring that immediately upon manufacture, the lithium-ion battery is conditioned by a process involving at least two or three charge/discharge cycles, followed by a final charge to at least around 30 to 40% stage-of-charge. The cell must then be degassed and finally resealed before it is ready for storage and/or transportation.

Although the disclosure of WO 2016/027082 A1 demonstrates some clear advantages of sodium-ion cells with respect to lithium-ion cells, there is still an ongoing need to make sodium-ion cells even safer. Therefore, another aim of the present invention is to a provide a process for providing a sodium-ion cell (not half cells) and/or a sodium-ion battery in which the resulting sodium-ion cell and/or sodium-ion battery is provided in an even safer state than a sodium-ion cell and/or a sodium-ion battery produced according to one or more processes known in the art.

A recent report titled "Thermal Stability of High Power 26650-Type Cylindrical Na-Ion batteries" Chin.Phys.Lett." Vol.38, No. 7 (2021) 076501 describes the safety test results of high power 26650-type cylindrical sodium-ion cells at a fully charged state. The tests include (a) an external short-circuit test, (b) an overheating test, (c) an overcharge test; (d) an overdischarge test, (e) crush tests, and (f) nail penetration test.

The report details that sodium-ion cells comprising a layered oxide cathode and a hard carbon anode are able to be discharged to about -2.5V and then recharged and cycled in the range 4.0V to 1.5V. Due the lack of any obvious temperature change, and because the capacity can be recovered after the overdischarge event, the workers conclude that this (along with the results from the overheating test; overcharge test; crush tests; and nail penetration tests) demonstrates "good safety" of the sodium-ion battery.

However, with respect to the overdischarge test, the workers have only established this "good safety" in the sense of a single discharge to -2.5V. There is no indication that discharging to -2.5V more than once has any bearing on whether a sodium-ion cell would be susceptible to producing smoke, giving out extreme heat, catching fire or exploding. Therefore, there is no teaching in this prior art whether a sodium-ion cell discharged to -2.5V would be rendered safe for storage and/or transportation and/or maintenance.

Furthermore, whilst the workers claim that the capacity of the sodium-ion cell "can be recovered after the overdischarge event", it's not clear how much of the original discharge capacity has been affected by the overdischarge event. Therefore, the workers have not established any sort of effect that the overdischarge event has on the original or expected charge capacity of the sodium-ion cell.

Finally, it is unknown from this report whether the discharge must be performed at a fast or a slow rate because there is not a specified C-rate of charging/discharging in their experimental data. Therefore, it is not clear whether all or substantially all (80 to 100%) of the charge had in fact been dissipated as a result of the single overdischarge process they describe. It would be expected that charge in the cell would not have been fully or substantially dissipated without a slow discharge, and as the workers do not specify a C-rate of charging/discharging, it is unclear the degree of charge that would in fact be remaining in their cells after the discharge process, specifically whether this would be 20% or less.

The invention therefore aims to mitigate or eliminate one or more of the aforesaid disadvantages of the known art.

SUMMARY OF THE INVENTION

In one aspect, the present invention provides a process for providing a sodium-ion cell in a state of charge from about 20% or less, and which is capable of safe storage and/or transportation and/or maintenance, comprising the steps:

a) providing a sodium-ion cell comprising a positive electrode comprising a positive electrode material, a positive electrode current collector, a negative electrode comprising a negative electrode material, a negative electrode current collector and an electrolyte; and
b) subjecting the sodium-ion cell provided in step a) to one or more discharge operations to a minimum cell operating voltage (cell Vmin) of less than - 0.1V, at a discharge rate of C/<10; and
c) maintaining the sodium-ion cell at a voltage of 1V or less.

The phrase "state of charge" as used herein, is intended to be interpreted in its broadest sense and to mean either the "instantaneous state of charge" or the "true state of charge". The "state of charge" may be positive or, as defined below, negative.

The phrase "instantaneous state of charge" as used herein is intended to mean the available capacity at the voltage of measurement as a ratio of the capacity between V=0 and Vmax (e.g., 4.3V), and is measured with current being drawn. Because Vmin according to the present invention has a voltage of less than -0.1V, we define herein the existence of a "negative" instantaneous state of charge when there is a non-zero capacity between Vmin and V=0. This is observed and explained in the examples disclosed herein.

The phrase "true state of charge" as used herein is intended to mean the capacity that is available at the open circuit voltage (OCV), as a ratio of the capacity between V=0 and Vmax (e.g., 4.3V), and is measured without current being drawn. Thus, the OCV provides a "true" indication of the actual state of charge, and a lower OCV is an indication of a lower state of charge. However, should the OCV be a negative value, damage may have occurred to a cell or battery, which is clearly undesirable.

As used herein the term "overdischarging" means discharging to less than -0.1V.

The sodium-ion cells provided in step a) of the process of the invention have preferably been subject to a conditioning process (also known as a "formation" process) involving one or more charge and discharge (i.e. charge/-discharge) operations prior to step b). That is, they are sodium-ion cells that have been previously charged. The sodium-ion cells provided in step a) may have been subject to a conditioning process involving two or three charge and discharge operations, optionally followed by degassing, prior to step b).

For the purposes of this disclosure, cells are described as "pristine" when they have been subject to a conditioning process but have not been subsequently used with an application device. Similarly, cells are described as "non-pristine" when they have been subject to a conditioning process and have then subsequently been used with an application device. An application device is any device that makes use of a cell or battery. An electric vehicle or mobile phone is an example of an application device.

Therefore, the action involved in "discharging the sodium-ion cell" in step b), is substantially the same regardless of whether step b) is performed on sodium-ion cells that have been subject to a conditioning process but have not been subsequently used with an application device ("pristine cells"), or whether step b) is performed on sodium-ion cells that have been subject to a conditioning process and have then subsequently been used with an application device ("non-pristine cells").

In the case that step b) is performed on sodium cells that have been subject to a conditioning process but have not yet been subsequently used with an application device ("pristine cells"), step b) may be conveniently performed immediately after step a).

As the sodium-ion cells provided in step a) of the process of the invention may have been subject to a conditioning process, step b) may be performed on a sodium-ion cell that is in a charged pristine state, discharged pristine state, charged non-pristine state, or an uncharged non-pristine state.

For the avoidance of doubt, it is not possible to perform the process of the present invention on pristine and/or non-pristine lithium-ion cells due to the copper dissolution reactions that occur when the cell is a voltage of less than -0.1V.

The action involved in "providing the sodium-ion cell" in step a) may involve constructing the sodium-ion cell. Therefore, step a) may comprise constructing a sodium-ion cell comprising a positive electrode comprising a positive electrode material, a positive electrode current collector, a negative electrode comprising a negative electrode material, a negative electrode current collector and an electrolyte. Alternatively, step a) of the present invention may simply comprise providing and/or supplying a preconstructed sodium-ion cell. Thus, step a) may or may not comprise any such construction and/or making of the sodium-ion cell.

Step b) of the process of the present invention causes a charge in the sodium-ion cell provided in step a) to be dissipated, and thus results in a sodium-ion cell that is in a state of charge from 20% or less. Preferably, the resulting sodium-ion cell is in a state of charge of from about -20% to about 20%, further preferably from about -10% to about 10%. Ideally, the process of the present invention provides a sodium-ion cell that is in a state of charge of from about -5% to about 20%, and further ideally from about -5% to about 10%.

Step b) of the process of the present invention involves discharging the sodium-ion cell provided in step a) to a voltage (cell Vmin) of from less than -0.1V. Ideally, this is from less than -0.1V to about -5V, optionally from less than -0.1V to about -2.5V, optionally from less than -0.1V to about -2.0V, and preferably from less than -0.1V to about -1.7V. These voltage (cell Vmin) ranges are particularly desirable at a discharge rate of from C/$\leq$5 to C/$\geq$0.1, and highly preferably from C/$\leq$2 to C/$\geq$0.5.

Having an end point (e.g. -2.5V or -1.7V for instance) is particularly desirable when step b) is performed on a sodium-ion cell that is capable of being charged to the conventional and/or expected charge capacity of the cell. In one embodiment, step b) of the present invention involves discharging the sodium-ion cell provided in step a) to a voltage (cell Vmin) of from less than -0.1V to about -1.5V, and optionally from less than -0.1V to about -1.0V.

Preferably step b) of the present invention involves discharging the sodium-ion cell provided in step a) to a voltage (cell Vmin) of from less than -0.5V to about -5V, more preferably from less than -0.5V to about -2.5V, even more preferably from less than -0.5V to about -2.1V, and most preferably from less than -0.5V to about -1.7V. These voltage (cell Vmin) ranges are particularly desirable at a discharge rate of from C/$\leq$5 to C/$\geq$0.1, and highly preferably from C/$\leq$2 to C/$\geq$0.5.

In one embodiment, step b) of the present invention involves discharging the sodium-ion cell provided in step a) to a voltage (cell Vmin) of from less than -0.1V, optionally from about -0.2V or less, optionally from about -0.5V or less, optionally from about -0.9V or less, optionally from about -1.0V or less, optionally from about -1.4V or less, and optionally from about -1.6V or less.

As discussed above, a desired aim of the present invention is to a provide a process in which the resulting sodium-ion cell and/or sodium-ion battery is in a safer state than a sodium-ion cell and/or sodium-ion battery produced according to one or more processes known in the art. By the phrase "safer state" we mean that the state of charge of the resulting sodium ion cell and/or sodium-ion battery is lower than a comparable a sodium-ion cell and/or sodium battery discharged to a voltage (cell Vmin) of -0.1V or greater. Therefore, an effect arising from the present invention, and particularly from discharging the sodium-ion cell in step b) to a voltage (cell Vmin) of less than -0.1V, is that the state of charge from the resulting sodium-ion cell is lower than if a comparative sodium-ion cell were to be discharged to a voltage (cell Vmin) of -0.1V or greater. This is because the percentage of charge that remains in the sodium-ion cell that has been discharged to a voltage (cell Vmin) of less than -0.1V, will be lower than the percentage of charge that remains in the comparative cell that has been discharged to a voltage (cell Vmin) of -0.1V or greater. Thus, the present invention provides a sodium-ion cell that is in a safer state than a sodium-ion cell that has been discharged to a voltage (cell Vmin) of -0.1V or greater. Further still, the sodium-ion cells resulting from the process of the present invention surprisingly do not result in the risks of fire and explosion that are associated with discharging a comparable lithium-ion cell to a voltage (cell Vmin) of less than -0.1V. Therefore, such resulting sodium-ion cells are surprisingly capable of safe storage and/or safe transportation and/or safe maintenance. Moreover, the life expectancy of the resulting sodium-ion cells is also expected to be higher than for lithium-ion cells as a result of the ability of such sodium-ion cells to withstand discharging to a voltage (cell Vmin) of less than -0.1V without affecting the conventional or expected charge capacity.

The sodium-ion cells provided in step a) ideally have a maximum operating cell voltage (cell Vmax), which has been assigned for instance by a manufacturer, and which is based on the electrochemistry of the cell. Preferably, a sodium-ion cell provided in step a) (pristine or non-pristine) has an assigned cell Vmax from about 1.0 V to about 5.0 V, ideally from 3.0V to 4.5V. For example, a highly preferable sodium-ion cell provided in step a) of the process of the present invention will use alkali metal-containing oxide-based (cathode) chemistry, and as such, may have a cell Vmax from about 4.0 V to about 4.5 V, ideally from about 4.0 V to about 4.3 V. Alternatively, a sodium-ion cell provided in step a) of the process of the present invention may use Prussian Blue analogues (also including Prussian White) or phosphate-based (cathode) chemistry, and as such, may have a cell Vmax from about 3.0 V to about 3.9 V.

Preferably step a) comprises a sodium-ion cell that is capable of being charged to the conventional and/or expected charge capacity of the cell. As used herein, "a sodium-ion cell that is capable of being charged to the conventional and/or expected charge capacity of the cell" is intended to mean a cell that is capable of being charged to from ≥50% to 100%, preferably from ≥80% to 100% of a cell Vmax.

It will be appreciated that a sodium-ion cell that is capable of being charged to the conventional and/or expected charge capacity of the cell may be a pristine sodium-ion cell. Thus, such a sodium-ion cell may be capable of being charged to from ≥90% to 100% of its cell Vmax.

It will also be appreciated that a sodium-ion cell that is capable of being charged to the conventional and/or expected charge capacity of the cell may be a non-pristine sodium-ion cell. During the life span of a sodium-ion cell, variation from cell Vmax may occur, which may be most prominent during aging of the sodium-ion cell in use (when used with an application device for instance). Thus, such a sodium-ion cell may be capable of being charged to from ≥50% to 100% of its cell Vmax.

A further effect arising from the present invention, and particularly in those embodiments in which step a) preferably comprises a sodium-ion cell that is capable of being charged to the conventional and/or expected charge capacity of the cell is that the electrochemical performance of a resulting sodium-ion cell is not substantially affected. Further still, following a period of prolonged storage and charging to their conventional and/or expected charge capacity, the resulting sodium-ion cell may be repeatedly cycled from a cell Vmin of 0V to its conventional and/or expected charge capacity, for example indefinitely or at least in excess of 100 times or at least in excess of 20 times, again without causing any detriment whatsoever to the conventional charge capacity of the cells. Further still, cycling from a cell Vmin of 0 V to a cell Vmax from about 1.0 V to about 5.0 V (preferably, from about 3.0 V to about 4.5 V) may be performed with a period of rest for example for at least 30 minutes, optionally for at least 1 hour, optionally for at least 4 hours, optionally for at least 8 hours, optionally for at least 12 hours, optionally for at least 24 hours, and optionally for at least 96 hours, at or close to a cell Vmin of 0V between each cycle, again without affecting the charge capacity of the cell.

In one embodiment, step a) comprises a sodium-ion cell that is not capable of being charged to the conventional and/or expected charge capacity of the cell, otherwise known as a "dead cell" or a "faulty cell". As used herein, this is intended to mean a sodium-ion cell that is not capable of being charged to from ≥50% to 100%, preferably from ≥80% to 100% of a cell Vmax which has been assigned, for instance by a manufacturer, and which is based on the electrochemistry of the cell.

It will be appreciated that a sodium-ion cell that is not capable of being charged to the conventional and/or expected charge capacity of the cell may be a pristine sodium-ion cell. Thus, such a cell may not be capable of being charged to from ≥50% to 100%, preferably from ≥80% to 100% of is cell Vmax.

It will also be appreciated that a sodium-ion cell that is not capable of being charged to the conventional and/or expected charge capacity of the cell may be a non-pristine sodium-ion cell. Thus, such a cell may not be capable of being charged to from ≥50% to 100%, preferably from ≥80% to 100% of is cell Vmax.

A further effect arising from the present invention, and particularly in those embodiments in which step a) comprises a sodium-ion cell that is not capable of being charged to the conventional and/or expected charge capacity of the cell, is that the resulting sodium-ion cell is in a safer state due to the lower percentage of charge that remains (if any) in the cell. Thus, such sodium-ion cells are capable of safe storage and/or safe transportation and/or safe maintenance, and/or if appropriate, safe destruction.

As discussed above, another desired aim of the present invention is to provide a process for providing a sodium-ion cell and/or sodium-ion battery in a state of charge of, for example, from 20% or less, but which can be provided in a relatively short time period of time (i.e. less than 100 hours). Although low discharge rates (C/20 or C/100) are more likely to produce a sodium-ion cell with all or practically all of the charge dissipated, prior art methods only teach that a sodium-ion cell should be discharged to a voltage (cell Vmin) of -0.1V or greater. Therefore, it would be highly beneficial to dissipate all or practically all of the charge from the sodium-ion cell at a high discharge rate (C/<10), and thus obtain a sodium-ion cell in a state of charge from 20% or less in a shorter period of time.

A preferred method of discharging the sodium-ion cell in step b) of the present invention is to draw a constant current at a discharge rate of C/<10 until the sodium-ion cell measures a voltage (cell Vmin) of less than -0.1V. A discharge rate of C/<10 means that a discharge current will discharge the entire sodium-ion cell in less than 10 hours. As understood by those skilled in the art, a discharge charge rate of C/<10 can also be expressed as >0.1C (i.e., 1 ÷ less than 10 hours = >0.1 C).

In one embodiment, the discharging performed at step b) of the present invention is at a discharge rate of from C/<10 (i.e. greater than (>) 0.1C) to about 4000C, optionally from about C/<10 to about 1000C, optionally from about C/<10 to about 500C, optionally from about C/<10 to about 200C, optionally from about C/<10 to about 150C, and optionally from about C/<10 to about 50C.

In one embodiment, the discharging performed at step b) of the present invention is at a discharge rate of from C/<10 to C/$\geq$0.1 (10C), optionally of from C/<10 to C/$\geq$0.33 (3C), and further optionally of from C/<10 to C/$\geq$0.5 (2C).

A discharge rate of from C/<10 to C/$\geq$0.1 (10C) therefore means that a discharge current will discharge the entire sodium-ion cell in a time frame from 6 minutes or more (i.e. C/$\geq$0.1 x 60 minutes = 6 minutes) to less than 10 hours (i.e. C/<10).

The benefit of this preferred method is that because the cell at step b) can be safely discharged to a voltage (cell Vmin) of less than -0.1V as discussed above, higher rates of discharge can be used to dissipate all, or practically all of the charge from the resulting sodium-ion cell in a shorter period of time. Furthermore, the state of charge of the resulting sodium-ion cell discharged to a voltage (cell Vmin) of less than -0.1V at a discharge rate of C/<10 was found to be closer to 0% than the comparative sodium-ion cell discharged to a voltage (cell Vmin) of 0V (i.e. -0.1V or greater).

In one embodiment, the discharging performed at step b) of the present invention is at a discharge rate of C/$\leq$8, optionally C/$\leq$6, optionally C/$\leq$4, optionally C/$\leq$2, optionally C/$\leq$1, and optionally C/$\leq$0.5.

In one embodiment, the discharging performed at step b) of the present invention is at a discharge rate of from C/<10 to C/$\geq$2.

Preferably, the discharging performed at step b) of the present invention is at a discharge rate of from C/$\leq$5 to C/$\geq$0.1, and more preferably from C/$\leq$5 to C/$\geq$0.5. Highly preferably, the discharging performed at step b) of the present invention is at a discharge rate of from C/$\leq$2 to C/$\geq$0.1, and most preferably from C/$\leq$2 to C/$\geq$0.5. As discussed above, a discharge rate of from C/$\leq$2 to C/$\geq$0.5, means that a discharge current will discharge the entire sodium-ion cell in a time frame from 30 minutes or more (i.e. C/$\geq$0.5 x 60 minutes = 30 minutes or more) to 2 hours or less (i.e. C/$\leq$2).

In one embodiment, the discharging performed at step b) of the present invention is at a discharge rate of C/2, and optionally C/0.5 (2C).

In those embodiments in which step a) comprises a sodium-ion cell that is capable of being charged to the conventional and/or expected charge capacity, step b) of the present invention is preferably performed at a discharge rate of from C/<10 to C/$\geq$0.1 (10C), optionally of from C/<10 to C/$\geq$0.33 (3C), and further optionally of from C/<10 to C/$\geq$0.5 (2C). In such an embodiment, a discharge rate of from C/$\leq$5 to C/$\geq$0.1 is preferable, and from C/$\leq$2 to C/$\geq$0.5, is highly preferable.

In those embodiments in which step a) comprises a sodium-ion cell that is not capable of being charged to the conventional and/or expected charge capacity step b) of the present invention is preferably performed at a discharge rate of about 12C or more (also expressed as C/$\leq$0.083). Thus, a discharge rate of 12C or more means that a discharge current will discharge the entire sodium-ion cell in 5 minutes or less.

In those embodiments in which step a) comprises a sodium-ion cell that is not capable of being charged to the conventional and/or expected charge capacity, step b) of the present invention is preferably performed at a discharge rate of from about 12C or more to about 4000C or less, optionally of from about 12C or more to about 1000C or less, optionally of from about 12C or more to about 500C or less, optionally of from about 12C or more to about 200C or less, optionally 12C or more to about 150C or less.

In those embodiments in which step a) comprises a sodium-ion cell that is capable of being charged to the conventional and/or expected charge capacity, and comprises a positive electrode material comprising an alkali metal-containing oxide, step b) of the present invention may be performed a preferable discharge rate from C/$\leq$5 to C/$\geq$0.1, and highly preferably from C/$\leq$2 to C/$\geq$0.5.

In one embodiment, the process of the present invention may further include step c) which comprises maintaining the sodium-ion at a voltage of 1V or less. Thus, the sodium-ion cell provided in step a) may be maintained at a voltage which is above that of the cell Vmin (as defined herein) of the sodium-ion cell. Step c) may be performed immediately after step b).

A desired aim of the present invention is to produce a sodium-ion cell that has as low a percentage charge as possible from about 20% or less. Therefore, advantageously, step c) may help to dissipate any remaining charge from the sodium-ion cell, and therefore provide a resulting sodium-ion cell with as low a percentage charge as possible within the range from about -20% to 20%, and preferably from -10% to 10%. Ideally, within the range from about -5% to about 20%, and further ideally from about -5% to about 10%.

Given the resulting sodium-ion cells from the process of the present invention are stable for a prolonged period of time, step c) may be performed for a period of time, for example from 1 minute or more. Step c) could be performed for a prolonged period of time for example for at least 30 minutes, optionally for at least 1 hour, optionally for at least 4 hours, optionally for at least 8 hours, and optionally for at least 24 hours.

According to one embodiment of the invention, step c) comprises maintaining the sodium-ion cell at a voltage of 1V or less, optionally 0.5V or less, optionally 0V, optionally 0V or less, optionally -0.1V or less, and optionally less than -0.1V. In one embodiment, step c) comprises maintaining the sodium-ion cell at a voltage of from about 1V to about -5.0V, preferably from about 1V to about -2.5V, further preferably from about 1V to about -2.0V, and more preferably from about 1V to about -1.70V. Step c) may also comprise maintaining the sodium-ion cell at a voltage of from about 1V to about 0V.

In one embodiment, step c) may comprise maintaining the sodium-ion cell at a voltage discussed above using a removable shorting device as described below. Alternatively, or additionally, the process may further comprise step d), in which step d) comprises removing a removable shorting device as described below.

In one embodiment, the process of the invention may contain an initial step of performing a conditioning cycle. That is, the present invention provides a process for providing a sodium-ion cell in a state of charge from about 20% or less, and which is preferably capable of safe storage and/or transportation and/or maintenance, comprising the steps:

a) performing a conditioning cycle on a sodium-ion cell, preferably in which the sodium-ion cell comprises a positive electrode comprising a positive electrode material, a positive electrode current collector, a negative electrode comprising a negative electrode material, a negative electrode current collector and an electrolyte; and
b) subjecting the sodium-ion cell provided in step a) to one or more discharge operations to a voltage (i.e. cell Vmin) of less than -0.1V, preferably at a discharge rate of C/<10.

As described above, the conditioning cycle is typically one or more charge and discharge operations (or as otherwise defined above).

A typical conditioning cycle as per step a) above, may comprise:

i) providing a sodium-ion cell that has not been subject to a charge operation, preferably in which the sodium-ion cell comprises a positive electrode comprising a positive electrode material, a positive electrode current collector, a negative electrode comprising a negative electrode material, a negative electrode current collector and an electrolyte;
ii) charging said sodium-ion cell from a first voltage to a second voltage, in which the second voltage is from about 2V to about 4.5V, and in which the charging is performed at a rate from about C/2 to about C/50, and optionally in which the second voltage is maintained for a period of time from about 5 minutes to about 10 hrs, or until a current value of said cell falls to a current value equivalent to C/5 to C/100;
iii) discharging said sodium-ion cell from the second voltage to a third voltage, in which the third voltage is from about 0V to 3V, and in which the discharging is performed a rate from about C/2 to about C/50; and
iv) optionally repeating steps ii) and iii) one or more times.

The first voltage is lower than the second voltage. Optionally, the first voltage is from -0.5V or greater. Ideally, it is from -0.35V to 1V. The charging/discharging rate is typically at rate such as C/10, but could be at C/2, C/5, or C/50. Ideally, it is from C/5 to about C/10.

A skilled person would also be aware that different conditioning cycles may also be used. For example, step ii) may alternatively comprise charging said sodium-ion cell from a first voltage to a second voltage and maintaining that second voltage (such as 1.5 V) for a period of time (such as 30 min or 30 h; or from 30 mins to 30hrs). Such an alternative step ii) may be performed alone as a conditioning cycle or used in conjunction with step iii) as described above. Further still, the conditioning process may also include a further step between steps ii) and iii), and/or as a further step after step iii), comprising subjecting the cell to one or more charge/discharge operations between 0 to 4.2V.

The purpose of the conditioning process is to form stable interfaces at the surfaces between the electrodes and the electrolytes. In particular, the formation of a stable interfacial layer on the anode, dubbed in the literature as the 'solid electrolyte interphase' (SEI), or the cathode, dubbed as the 'cathode electrolyte interphase' (CEI), is one of the main objectives of this conditioning process. The skilled person would know that, in the process of forming said interfacial layers, undesirable gas generation (reaction products in the process of forming the interfacial layers) might occur. Thus, after the conditioning process, an optional step would be to remove this gas generation and then re-seal the cell (if required): re-sealing will depend on the type of cell used (for example, a skilled person would know that re-sealing might be required for a pouch cell, but not necessarily for a prismatic or cylindrical cell).

In another aspect, the present invention provides a sodium-ion cell according to the process of the present invention.

In another aspect, the present invention provides an energy storage device comprising one or more sodium-ion cells according to the process of the present invention.

In another aspect, the present invention provides a process for providing a sodium-ion battery which is in a state of charge from about 20% or less and which is capable of safe storage and/or transportation and/or maintenance, and in which the process comprises the step of providing a sodium-ion battery comprising two or more sodium-ion cells, and wherein each of the two or more sodium-ion cells are a sodium ion cell according to the process of the present invention.

In another aspect, the present invention provides a process for providing a sodium-ion battery which is in a state of charge from about 20% or less and which is capable of safe storage and/or transportation and/or maintenance, comprising the steps:

a) providing a sodium-ion battery, in which the sodium-ion battery comprises one or more sodium-ion cells comprising a positive electrode comprising a positive electrode material, a positive electrode current collector, a negative electrode comprising a negative electrode material, a negative electrode current collector and an electrolyte; and
b) subjecting the sodium-ion battery provided in step a) to one or more discharging operations to a minimum battery operating voltage (battery Vmin) of less than -0.1V, at a discharge rate of C/<10; and
c) maintaining the sodium-ion battery at a voltage of 1V or less.

Preferably, all of the one or more sodium-ion cells used to provide the sodium-ion battery in step a) of the process of the invention have been subject to a conditioning process (also known as a "formation" process) involving one or more charge and discharge operations prior to step b). That is, all of the one or more sodium-ion cells are sodium-ion cells that have been previously charged. All of one or more sodium-ion cells used to provide the sodium-ion battery in step a) may have been subject to a conditioning process involving two or three charge and discharge operations, optionally followed by degassing, prior to step b). Such a conditioning process may be as described above.

For the purposes of this disclosure, batteries are described as "pristine" when all of the sodium-ion cells that form the battery have been subject to a conditioning process, but none of such cells have been subsequently used with an application device. Batteries are described as "non-pristine" when all of the sodium-ion cells that form the battery have been subject to a conditioning process, and one or more of such cells have then subsequently been used with an application device. An application device is any device that makes use of a cell or battery. An electric vehicle or mobile phone is an example of an application device.

Therefore, the action involved in "discharging the sodium-ion battery" in step b), is substantially the same regardless of whether step b) is performed on a "pristine" sodium-ion battery, or whether step b) is performed on a "non-pristine" sodium-ion battery.

In the case that step b) is performed on a "pristine" sodium-ion battery, step b) may be conveniently performed immediately after step a).

As the sodium-ion battery provided in step a) preferably contains cells that have each been subject to a conditioning process, step b) may be performed on a sodium-ion battery that is in a charged pristine state, discharged pristine state, charged non-pristine state, or an uncharged non-pristine state.

For the avoidance of doubt, it is not possible to perform the process of the present invention on pristine and/or non-pristine lithium-ion batteries due to the copper dissolution reactions that occur when the cell is a voltage of less than -0.1V.

The action involved in "providing the sodium-ion battery" in step a) may involve constructing the sodium-ion battery. Therefore, step a) may comprise constructing a sodium-ion battery comprising one or more sodium-ion cells comprising a positive electrode comprising a positive electrode material, a positive electrode current collector, a negative electrode comprising a negative electrode material, a negative electrode current collector and an electrolyte. In an alternative embodiment, step a) of the present invention may simply comprise providing and/or supplying a preconstructed sodium-ion battery. Thus, step a) may or may not comprise any such construction and/or making of the sodium-ion battery.

Step b) of the process of the present invention causes a charge in the sodium-ion battery provided in step a) to be dissipated, and thus results in a sodium-ion battery that is in a state of charge from 20% or less. Preferably, the resulting sodium-ion battery is in a state of charge of from about -20% to about 20%, further preferably from about -10% to about 10%. Ideally the process of the present invention provides a sodium-ion battery that is in a state of charge of from about -5% to about 20%, and further ideally from about from about -5% to about 10%.

Step b) of the process of the present invention involves discharging the sodium-ion battery provided in step a) to a voltage (cell Vmin) of from less than -0.1V. Ideally, this is from less than -0.1V to about -5V, optionally from less than -0.1V to about -2.5V, optionally from less than -0.1V to about -2.0V, and preferably from less than -0.1V to about -1.7V. These voltage (cell Vmin) ranges are particularly desirable at a discharge rate of from C/≤5 to C/≥0.1, and highly preferably from C/≤2 to C/≥0.5.

Having an end point (e.g. 2.5V or -1.7V for instance) is particularly desirable when step b) is performance on a sodium-ion battery that is capable of being charged to the conventional and/or expected charge capacity of the cell. In one embodiment, step b) of the present invention involves discharging the sodium-ion battery provided in step a) to a voltage (battery Vmin) of from less than -0.1V to about -1.5V, and optionally from less than -0.1V to about - 1.0V.

Preferably step b) of the present invention involves discharging the sodium-ion battery provided in step a) to a voltage (battery Vmin) of from less than -0.5V to about -5V, more preferably from less than -0.5V to about -2.5V, even more preferably from less than -0.5V to about -2.1V, and most preferably from less than -0.5V to about -1.7V. These voltage (battery Vmin) ranges are particularly desirable at a discharge rate of from C/≤5 to C/≥0.1, and highly preferably from C/≤2 to C/≥0.5.

In one embodiment, step b) of the present invention involves discharging the sodium-ion battery provided in step a) to a voltage (battery Vmin) of from less than -0.1V, optionally from about -0.2V or less, optionally from about -0.5V or less, optionally from about -0.9V or less, optionally from about -1.0V or less, optionally from about -1.4V or less, and optionally from about -1.6V or less.

As discussed above, a desired aim of the present invention is to a provide a process in which the resulting sodium-ion cell and/or sodium-ion battery is in a safer state than a sodium-ion cell and/or sodium-ion battery produced according to one or more processes known in the art. By the phrase "safer state" we mean that the state of charge of the resulting sodium ion cell and/or sodium-ion battery is lower than a comparable a sodium-ion cell and/or sodium battery discharged to a voltage (cell Vmin) of -0.1V or greater. Therefore, an effect arising from the present invention, and particularly from discharging the sodium-ion battery in step b) to a voltage (battery Vmin) of less than -0.1V, is that the state of charge from the resulting sodium-ion battery is lower than if a comparative sodium-ion battery were to be discharged to a voltage (battery Vmin) of -0.1V or greater. This is because the percentage of charge that remains in the sodium-ion battery that has been discharged to a voltage (battery Vmin) of less than -0.1V, will be lower than the percentage of charge that remains in the comparative battery that has been discharged to a voltage (battery Vmin) of -0.1V or greater. Thus, the present invention provides a sodium-ion battery that is in a safer state than a sodium-ion battery that has been discharged to a voltage (battery Vmin) of -0.1V or greater. Further still, the sodium-ion batteries resulting from the process of the present invention surprisingly do not result in the risks of fire and explosion that are associated with discharging a comparable lithium-ion battery to a voltage (battery Vmin) of less than -0.1V. Therefore, such resulting sodium-ion batteries are surprisingly capable of safe storage and/or safe transportation and/or safe maintenance. Moreover, the life expectancy of the resulting sodium-ion batteries is also expected to be higher than for lithium-ion cells as a result of the ability of such sodium-ion batteries to withstand discharging to a voltage (cell Vmin) of less than -0.1V without affecting the conventional or expected charge capacity.

The sodium-ion battery provided in step a) ideally has a maximum operating cell voltage (battery Vmax), which has been assigned for instance by a manufacturer, and which is based on the electrochemistry of the battery. Furthermore, the sodium-ion cells used to provide the sodium-ion battery ideally may each have a maximum operating cell voltage (cell Vmax), which has been assigned for instance by a manufacturer, and which is based on the electrochemistry of the cell. Preferably, one or more sodium-ion cells used to provide the sodium-ion battery may each have been assigned a cell Vmax from about 1.0 V to about 5.0 V, ideally from 3.0V to 4.5V. For example, a highly preferable sodium-ion cell will use alkali metal-containing oxide-based (cathode) chemistry, and as such may have a cell Vmax from about 4.0 V to about 4.5 V, ideally from about 4.0 V to about 4.3 V. Alternatively, a sodium-ion cell may use Prussian Blue analogues (also including Prussian White ) or phosphate-based (cathode) chemistry, and as such, may have a cell Vmax from about 3.0 V to about 3.9 V.

Preferably, step a) comprises a sodium-ion battery that is capable of being charged to the conventional and/or expected charge capacity of the battery. As used herein, this is intended to mean a sodium-battery that can be charged to from ≥50% to 100%, preferably from ≥80% to 100% of its battery Vmax.

It will be appreciated that a sodium-ion battery that is capable of being charged to the conventional and/or expected charge capacity of the battery may be a pristine sodium-ion battery. Thus, such a sodium-ion battery may be capable of being charged to from ≥90% to 100% of its battery Vmax. It will also be appreciated that a sodium-ion battery that is capable of being charged to the conventional and/or expected charge capacity of the battery may be a non-pristine sodium-ion battery. During the life span of the sodium-ion battery, variation from battery Vmax may occur, which may be most prominent during aging of the sodium-ion battery in use. Thus, such a sodium-ion battery may be capable of being charged to from ≥50% to 100% of its battery Vmax.

A further effect arising from the present invention, and particularly in those embodiments in which step a) preferably comprises a sodium-ion battery that is capable of being charged to the conventional and/or expected charge capacity of the battery is that the electrochemical performance of a resulting sodium-ion battery is not substantially affected.

In one embodiment, step a) comprises a sodium-ion battery that is not capable of being charged to the conventional and/or expected charge capacity of the battery, otherwise known as a "dead battery" or a "faulty battery". As used herein, this is intended to mean a sodium-ion battery that cannot be charged to from $\geq$50% to 100%, preferably from $\geq$80% to 100% of a battery Vmax which has been assigned, for instance by a manufacturer, and which is based on the electrochemistry of the battery.

It will be appreciated that a sodium-ion battery that is not capable of being charged to the conventional and/or expected charge capacity of the cell may be a pristine sodium-ion battery. Thus, such a sodium-ion battery may not be capable of being charged to from $\geq$50% to 100%, preferably from $\geq$80% to 100% of is battery Vmax.

It will also be appreciated that a sodium-ion battery that is not capable of being charged to the conventional and/or expected charge capacity of the battery may be a non-pristine sodium-ion battery. Thus, such a sodium-ion battery may not be capable of being charged to from $\geq$50% to 100%, preferably from $\geq$80% to 100% of is battery Vmax.

A further effect arising from the present invention, and particularly in those embodiments in which step a) comprises a sodium-ion battery that is not capable of being charged to the conventional and/or expected charge capacity of the battery is that the resulting sodium-ion battery is in a safer state due to the lower percentage of charge that remains (if any) in the battery. Thus, such sodium-ion batteries are capable of safe storage and/or safe maintenance, and/or safe transportation, and/or if appropriate, safe destruction.

Preferably step a) comprises providing a sodium-ion battery comprising two or more sodium-ion cells (such as those as defined herein, and particularly those that use alkali metal-containing oxide-based (cathode) chemistry). The two or more cells may have the same cell voltage profile, preferably, same nominal cell voltage profile, and may have the same electrochemical design. The term "same cell voltage profile" or "same cell nominal voltage profile" as used herein means the same voltage versus capacity relationship. As discussed above, each of the two or more cells may have a cell Vmax from about 1.0 V to about 5.0 V, and ideally from 3.0V to 4.5V. As also discussed above, all of the two or more cells may have been subject to a conditioning process (also known as a "formation" process) involving one or more charge and discharge operations prior to step b).

In one embodiment, step a) comprises a sodium-ion battery in parallel or serial configuration.

As discussed above, another desired aim of the present invention is to provide a process for providing a sodium-ion cell and/or sodium-ion battery in a state of charge of, for example, from 20% or less, but which can be provided in a relatively short time period of time (i.e. less than 100 hours). Although low discharge rates (C/20 or C/100) are more likely to produce a sodium-ion battery with all or practically all of the charge dissipated, prior art methods only teach that a sodium-ion battery should be discharged to a voltage (cell Vmin) of -0.1V or greater. Therefore, it would be highly beneficial to dissipate all or practically all of the charge from the sodium-ion battery at a high discharge rate (C/<10), and thus obtain a sodium-ion battery in a state of charge from 20% or less in a shorter period of time.

A preferred method of discharging the sodium-ion battery in step b) of the present invention is to draw a constant current at a discharge rate of C/<10 until the sodium-ion battery measures a voltage of less than -0.1V. A discharge rate of C/<10 means that a discharge current will discharge the entire sodium-ion battery in less than 10 hours. As understand by those skilled in the art, a discharge charge rate of C/<10 can also be expressed as >0.1C (i.e., 1 $\div$ less than 10 hours = >0.1 C).

In one embodiment, the discharging performed at step b) of the present invention is at a discharge rate of from C/<10 to about 4000C, optionally from about C/<10 to about 1000C, optionally from about C/<10 to about 500C, optionally from about C/<10 to about 200C, optionally from about C/<10 to about 150C, and optionally from about C/<10 to about 50C.

In one embodiment, the discharging performed at step b) of the present invention is at a discharge rate of from C/<10 to C/$\geq$0.1 (10C), optionally of from C/<10 to C/$\geq$0.33 (3C), and further optionally of from C/<10 to C/$\geq$0.5 (2C).

A discharge rate of from C/<10 to C/$\geq$0.1 (10C) therefore means that a discharge current will discharge the entire sodium-ion battery in a time frame from 6 minutes or more (i.e. C/$\geq$0.1 x 60 minutes = 6 minutes or more) to less than 10 hours (i.e. C/<10).

The benefit of this preferred method is that because the battery at step b) can be safely discharged to a voltage (battery Vmax) of less than -0.1V as discussed above, higher rates of discharge can be used to dissipate all, or practically all of the charge from the resulting sodium-ion battery in a shorter period of time. Furthermore, the state of charge of the resulting sodium-ion battery discharged to a voltage of less than -0.1V at a discharge rate of C/<10 was found to be closer to 0% than the comparative sodium-ion battery discharged to a voltage of 0V (i.e. -0.1V or greater).

In one embodiment, the discharging performed at step b) of the present invention is at a discharge rate of C/$\leq$8, optionally C/$\leq$6, optionally C/$\leq$4, optionally C/$\leq$2, optionally C/$\leq$1, and optionally C/$\leq$0.5.

In one embodiment, the discharging performed at step b) of the present invention is at a discharge rate of from C/<10 to C/$\geq$2.

Preferably, the discharging performed at step b) of the present invention is at a discharge rate of from C/$\leq$5 to C/$\geq$0.1, and more preferably from C/$\leq$5 to C/$\geq$0.5. Highly preferably, the discharging performed at step b) of the present invention is at a discharge rate of from C/$\leq$2 to C/$\geq$0.1, and most preferably from C/$\leq$2 to C/$\geq$0.5. As discussed above, a discharge rate of from C/≤2 to C/≥0.5, means that a discharge current will discharge the entire sodium-ion battery in a time frame from 30 minutes or more (i.e. C/≥0.5 x 60 minutes = 30 minutes or more) to 2 hours or less (i.e. C/≤2).

In one embodiment, the discharging performed at step b) of the present invention is at a discharge rate of C/2, and optionally C/0.5.

In those embodiments in which step a) comprises a sodium-ion battery that is capable of being charged to the conventional and/or expected charge capacity, step b) of the present invention is preferably performed at a discharge rate of from C/<10 to C/≥0.1 (10C), optionally of from C/<10 to C/≥0.33 (3C), and further optionally of from C/<10 to C/≥0.5 (2C). In such an embodiment, a discharge rate of from C/≤5 to C/≥0.1 is preferable, and from C/≤2 to C/≥0.5, is highly preferable.

In those embodiments in which step a) comprises a sodium-ion battery that is not capable of being charged to the conventional and/or expected charge capacity, step b) of the present invention is preferably performed at a discharge rate of 12C or more (also expressed as C/≤0.083). Thus, a discharge rate of 12C or more means that a discharge current will discharge the entire sodium-ion cell in 5 minutes or less.

In those embodiments in which step a) comprises a sodium-ion battery that is not capable of being charged to the conventional and/or expected charge capacity, step b) of the present invention is preferably performed at a discharge rate of from about 12C or more to about 4000C or less, optionally of from about 12C or more to about 1000C or less, optionally of from about 12C or more to about 500C or less, optionally of from about 12C or more to about 200C or less, optionally 12C or more to about 150C or less.

In those embodiments in which step a) comprises a sodium-ion battery that is capable of being charged to the conventional and/or expected charge capacity, and comprises one or more cells having a positive electrode material comprising an alkali metal-containing oxide, step b) of the present invention may be performed at a preferable discharge rate from C/≤5 to C/≥0.1, and highly preferably from C/≤2 to C/≥0.5.

In one embodiment, the process of the present invention may further comprise step c) which comprises maintaining the sodium-ion battery at a voltage of 1V or less, preferably for one minute or more. Thus, the sodium-ion battery maybe maintained at a voltage which is above that of the battery Vmin (as defined herein) of the sodium-ion battery. Step c) may be performed immediately after step b).

A desired aim of the present invention is to produce a sodium-ion battery that has as low a percentage charge as possible from about 20% or less. Therefore, advantageously, step c) may help to dissipate any remaining charge from the sodium-ion battery, and therefore provide a resulting sodium-ion battery with as low a percentage charge as possible within the range from about -20% to 20%, and preferably from -10% to 10%. Ideally, within the range from about -5% to about 20%, and further ideally from about -5% to about 10%.

Given the resulting sodium-ion batteries from the process of the present invention are stable for a prolonged period of time, step c) maybe performed for a period of time, for example from 1 minute or more. Step c) could be performed for prolonged period of time for example for at least 30 minutes, optionally for at least 1 hour, optionally for at least 4 hours, optionally for at least 8 hours, and optionally for at least 24 hours.

In one embodiment, step c) comprises maintaining the sodium-ion battery at a voltage of 1V or less, optionally 0.5V or less, optionally 0V, optionally 0V or less, optionally -0.1V or less, and optionally less than -0.1V. In one embodiment, step c) comprises maintaining the sodium-ion battery at a voltage of from about 1V to about -5.0V, preferably from about 1V to about -2.5V, further preferably from about 1V to about -2.0V, and more preferably from about 1V to about -1.70V. Step c) may also comprise maintaining the sodium-ion battery at a voltage of from about 1V to about 0V.

In one embodiment, step c) may comprise maintaining the sodium-ion battery at a voltage discussed above using a removing a removable shorting device as described below. Alternatively, or additionally, the process may further comprise step d), in which step d) comprises a removing a removable shorting device as described below.

In another aspect, the present invention provides a sodium-battery according to the process of the present invention.

In another aspect, the present invention provides a sodium-ion cell, preferably which is or is not capable of being charged to the conventional or expected charge capacity of the cell, and is preferably suitable for safe storage and/or transportation and/or maintenance, comprising a positive electrode comprising a positive electrode material, a positive electrode current collector, a negative electrode comprising a negative electrode material, a negative electrode current collector and an electrolyte, wherein the sodium-ion cell is in a state of charge from 20% or less, and wherein the sodium-ion cell is maintained at a voltage (i.e. cell Vmin) of less than -0.1V.

In another aspect, the present invention provides a sodium-ion cell, preferably which is or is not capable of being charged to the conventional or expected charge capacity of the cell, and is preferably suitable for safe storage and/or transportation and/or maintenance, comprising a positive electrode comprising a positive electrode material, a positive electrode current collector, a negative electrode comprising a negative electrode material, a negative electrode current collector and an electrolyte, wherein the sodium-ion cell is in a state of charge from 20% or less, and wherein the potential difference between the positive electrode and the negative electrode is less than -0.1V.

In one embodiment, the sodium-ion cell is a pristine and/or a non-pristine cell.

In one embodiment, the sodium-ion cell is in a state of charge of from about -20% to about 20%, further preferably from about -10% to about 10%. Ideally, the sodium-ion cell is in a state of charge of from about -5% to about 20%, and further ideally from about from about - 5% to about 10%.

In one embodiment, the sodium-ion cell has or is maintained at a voltage (cell Vmin) of from about -0.2V or less, optionally from about -0.5V or less, optionally from about -0.9V or less, optionally from about -1.0V or less, optionally from about -1.4V or less, and optionally from about -1.6V or less.

In one embodiment, the sodium-ion cell has or is maintained a voltage (cell Vmin) of from less than -0.1V to about -5.0V, optionally from less than -0.1V to about -2.5V, and optionally from less than -0.1V to about -1.0V.

The voltage (cell Vmin) may be maintained using a removable shorting device as described below.

In another aspect, the present invention provides a sodium-ion battery, preferably which is or is not capable of being charged to the conventional or expected charge capacity of the battery, and is preferably suitable for safe storage and/or transportation and/or maintenance, comprising one or more sodium-ion cells comprising a positive electrode comprising a positive electrode material, a positive electrode current collector, a negative electrode comprising a negative electrode material, a negative electrode current collector and an electrolyte, wherein the sodium-ion cell is in a state of charge of from 20% or less, and wherein the sodium-ion battery is maintained at a voltage (battery Vmin) of less than -0.1V.

In another aspect, the present invention provides a sodium-ion battery, preferably which is or is not capable of being charged to the conventional or expected charge capacity of the battery, and is preferably suitable for safe storage and/or transportation and/or maintenance, comprising one or more sodium-ion cells comprising a positive electrode comprising a positive electrode material, a positive electrode current collector, a negative electrode comprising a negative electrode material, a negative electrode current collector and an electrolyte, wherein the sodium-ion cell is in a state of charge of from 20% or less, and wherein the potential difference between the positive electrode and the negative electrode is less than -0.1V.

In one embodiment, the sodium-ion battery is a pristine and/or a non-pristine battery.

In one embodiment, the sodium-ion cell is in a state of charge of from about -20% to about 20%, further preferably from about -10% to about 10%. Ideally, the sodium-ion cell is in a state of charge of from about -5% to about 20%, and further ideally from about from about - 5% to about 10%.

In one embodiment, the sodium-ion battery has or is maintained at a voltage (battery Vmin) of from about -0.2V or less, optionally from about -0.5V or less, optionally from about -0.9V or less, optionally from about -1.0V or less, optionally from about -1.4V or less, and optionally from about -1.6V or less.

In one embodiment, the sodium-ion battery has or is maintained a voltage (battery Vmin) of from less than -0.1V to about -5.0V, optionally from less than -0.1V to about -2.5V, and optionally from less than -0.1V to about -1.0V.

The voltage (battery Vmin) may be maintained using a removable shorting device as described below.

In another aspect, the present invention provides a sodium-ion cell as described above and/or produced according to the process of the present invention as described above, being stored and/or transported.

In another aspect, the present invention provides a sodium-ion battery as described above and/or produced according to the process of the present invention as described above, being stored and/or transported.

In another aspect, the present invention provides for the storage and/or transportation and/or maintenance of a sodium-ion battery which comprises one or more sodium-ion cells as described above and/or as produced according to the process of the present invention as described above.

In another aspect, the present invention provides for the storage and/or transportation and/or maintenance of a sodium-ion cell and/or an energy storage device which comprises one or more sodium-ion cells as described above and/or as produced according to the process of the present invention as described above.

In another aspect, the present invention provides an energy storage device comprising one or more sodium-ion cells according to the process of the present invention and/or as described above.

The energy storage devices of the present invention comprise one or more sodium-ion cells as described above and examples of these energy storage devices include batteries, battery modules, battery packs, electrochemical devices, and electrochromic devices. In a preferred energy storage device according to the present invention, some or all of these one or more sodium-ion cells are connected in series.

Preferably, the present invention according to any of the above aspects also provides sodium-ion cells and/or energy storage devices (such as a sodium ion battery as described herein) which comprise a removable shorting device, for example between the cathode and anode electrodes, in at least one of the one or more of the sodium-ion cells. Preferably, the removable shorting device is connected to the terminals of the cathode and anode electrodes.

Removal of the shorting device includes any procedure that involves breaking the connection between the cathode and anode electrodes, thus removal of the shorting device does not need to involve physically removing the shorting device from the sodium-ion cell, or energy storage device, and in an alternative arrangement, the connection between the electrodes may be broken without physically removing the shorting device from the sodium-ion cell or energy storage device.

The shorting device will conveniently provide a physical and/or electrical short (a low impedance or low resistance connection which provides electrical conductivity) between the cathode and anode electrodes, to ensure that the amount of electrical energy in one or more of the sodium-ion cells is maintained 20% or less (or as defined in the preferred ranges described above), i.e the cell is in a very safe condition, whilst the sodium-ion cell or energy storage device is being stored and/or transported and/or maintained.

The shorting device can be internal or external, manual or an automatic device, it could be one of a number of different shorting devices known in the art such as triggered or latched and employing inductance or resistance and combinations thereof. It could be active or passive. As well as a physical device, the shorting device could be an electronic device.

Preferably the shorting device is easily removable, perhaps by at least a portion of the shorting device being external to the sodium-ion cell or energy storage device, so that the shorting device may be removed from the sodium-ion cell or energy storage device prior to use.

In a preferred format the shorting device will be located outside the cell housing or packaging and is a low impedance/resistance short between positive and negative tabs which in turn are connected to the positive and negative electrodes inside the housing or packaging.

Further, it is envisaged that in energy storage devices, either some or all of the individual sodium-ion cells used therein may be shorted, or alternatively, the entire energy storage device (e.g. sodium-ion battery) may be shorted. It is also envisaged that the removable shorting device may be reused to short a sodium-ion cell / energy storage device more than once, or it may be reused to short other sodium-ion cells or energy storage devices. The removable shorting device may be provided by any convenient means such as a shorting tab, or a conductive gel or other conductive material which, for example, provides a connection between anode and cathode electrodes in one or more of the sodium-ion cells.

Typically, the sodium-ion cells of the present invention (including the sodium-ion cells used in the sodium-ion batteries of the present invention) comprise a positive electrode comprising a positive electrode material, a positive electrode current collector, a negative electrode comprising a negative electrode material, a negative electrode current collector and an electrolyte.

Preferably, the sodium-ion cells of the present invention are non-symmetrical. By the phrase "non-symmetrical" we mean that the positive electrode active material is not the same as the negative electrode active material.

Suitable negative electrode (active) materials include amorphous carbon, hard carbon, soft carbon, silicon and any other material, for example alloying metals such as phosphorous, tin, germanium or antimony, materials storing sodium via a conversion (and/or alloying reaction) such as $Sb_2O_3$, $Fe_2O_3$, some titanates/sodium titanates etc, whose structure is adapted to allow the insertion/removal of sodium ions during charge/discharge. These suitable negative electrode materials may be used alone or in combination with each other. Hard carbon is particularly advantageous and preferable.

Advantageously the negative and positive current collectors comprise one or more conductive materials which are stable at from a voltage of less than -0.1V (or within the preferred voltage ranges described herein), and/or under conditions of from 20% or less, optionally from about -20% to about 20%, preferably from about -10% to about 10%. Ideally, from about -5% to about 20%, and further ideally from about -5% to about 10% (or within the preferred charge ranges described herein). By "stable" in this context we mean that the one or more conductive materials do not react with or form a solid solution with sodium under the conditions as specified (e.g., from less than -0.1V). A "solid solution" as defined herein is a solid mixture containing a major component and a minor component, in which the minor component is uniformly distributed within the crystal lattice of the major component. Sodium for instance will not form a solid solution with aluminium under these conditions.

Preferably, the one or more conductive materials do not alloy and/or otherwise react with sodium. The skilled person will understand from common general knowledge that aluminium does not alloy with sodium. However, it is possible for sodium to be present as an impurity in aluminium, or sodium to be used as a modifier at very low concentrations (e.g. 0.015%) in aluminium, to achieve grain boundary effects. However, this does not change the understanding herein that aluminium does not alloy with sodium.

In one embodiment, the one or more conductive materials may be in pure form, impure form, as an alloy or as a mixture, either alone or in combination with varying amounts of one or more other elements.

Further preferably at least one of the one or more conductive materials includes a low-grade material such as an industrial grade or a household grade material. Advantageously, the one or more conductive materials may comprise one or more metals, preferably selected from copper, aluminium, and titanium, most preferably aluminium.

The negative electrode current collector, the positive electrode current collector, or both the negative electrode current collector and the positive electrode current collector can comprise aluminium or aluminium alloy (e.g., an alloy of aluminium and one or more of Mg, Mn, Cr, Zn, Si, Fe, and Ni). Highly preferably, both the negative electrode current collector and the positive electrode current collector comprise an aluminium current collector. Advantageously, the same composition of conductive materials is chosen for both the positive and the negative current collector. Further, it is particularly preferred that at least one of the one or more conductive materials for both the positive and the negative current collectors, comprise aluminium, either in pure form, impure form, as an alloy or as a mixture, either alone or in combination with varying amounts of one or more other elements.

The Applicant has found that it is surprisingly possible to use low grade aluminium, for example from impure or household sources, as or in the conductive material of one or both current collectors, and this achieves obvious important commercial advantages. Furthermore, at the operating electrode potential the impurities in the low-grade aluminium (e.g. zinc or copper) are under cathodic protection and therefore do not dissolve into the electrolyte phase. This is in contrast with the usual requirement for high purity aluminium to be used in the cathode current collectors for lithium-ion and sodium-ion batteries in current use.

Household-grade aluminium (for example sold as "kitchen foil", "tin foil" or "oven foil") includes aluminium material that has an aluminium content from 92 to less than 100%, for example an aluminium content of from 92 to 99%. Impure aluminium may contain less than 92% aluminium.

The present invention therefore provides sodium-ion cells either per se and/or as used in an energy storage device (e.g. a sodium-ion battery as defined herein), comprising a negative electrode with one or more negative electrode materials and a negative electrode current collector, and a positive electrode with one or more positive electrode materials and a positive electrode current collector; wherein one or more of the positive and/or negative current collectors comprise one or more conductive materials which are stable in the range of less than -0.1V (or within the preferred voltage or charge ranges described herein).

Advantageously, the one or more conductive materials do not form a solid solution with sodium under the conditions as specified (e.g. from less than -0.1V). Preferably, the one or more conductive materials do not alloy and/or otherwise react with sodium. The one or more conductive materials may comprise one or more metals. These may be in pure form, in impure form, as an alloy or as a mixture, either alone or in combination with varying amounts of one or more other elements. Particularly preferably, the one or more current collectors comprise one or more metals selected from copper, aluminium, and titanium, most preferably aluminium.

The present Applicant has found that the sodium-ion cells of the present invention, either when used per se or as part of an energy storage device, are particularly advantageous when at least one of the positive and negative electrode current collectors, preferably the negative electrode current collector, comprises a carbon coating. This produces benefits such as better adhesion between the active negative electrode material and the negative electrode current collector, which in turn, leads to lower contact resistance. Current collectors that comprise a carbon-coating are also found to improve the rate performance and this enables current to be quickly charged/discharged. Similar advantages are obtained when the sodium-ion cell includes a positive electrode current collector which comprises a carbon coating. A sodium-ion cell that includes a positive current collector comprising a carbon coating in addition to a negative current collector comprising a carbon coating, is especially electrically efficient.

The current collectors that comprise a carbon coating preferably comprise one or more carbon-coated materials which are stable from less than -0.1V. Preferred carbon-coated materials include carbon-coated metals (the metal may be conductive but it does not need to be conductive per se as the carbon coating will provide conductivity). A carbon coating may be applied to the chosen material (being used to provide the conductive material) using any suitable technique, such as spray coating, solvent casting, dipping etc. Alternatively, suitable carbon coated materials may be commercially available. Carbon coated metals such as carbon coated copper, and/or carbon coated aluminium and/or carbon coated titanium are preferred, and carbon-coated aluminium Grade: SDX supplied by Showa Denko Inc. is particularly preferred. Carbon-coated low grade aluminium (e.g. from impure or household-grade sources) is extremely preferred. As discussed above, carbon-coated low grade aluminium is cheap to produce and the impurities present in the low grade aluminium do not leach or cause any cell performance problems.

The negative and positive electrode (active) materials used in the sodium-ion cells of the present invention (including the sodium-ion cells used in the sodium-ion batteries of the present invention) are any materials which are able to intercalate and de-intercalate (insert and remove) sodium ions during charging and discharging.

The positive electrode preferably comprises one or more positive electrode active materials which are capable of inserting and extracting alkali metals, and which are preferably selected from oxide-based materials, polyanionic materials, and Prussian Blue Analogue-based materials (also including Prussian White materials).

Particularly preferably, the one or more positive electrode active materials comprise one or more selected from alkali metal-containing oxide-based materials and alkali metal-containing polyanionic materials, in which the alkali metal is one or more alkali metals selected from sodium and/or potassium, preferably sodium, and optionally in conjunction with lithium. Certain positive electrode active materials contain lithium as a minor alkali metal constituent, i.e. the amount of lithium is less 50% by weight, preferably less than 10% by weight, and ideally less than 5% by weight, of the total alkali metal content,

The most preferred positive electrode active material is a compound of the general formula:

$$A_{1\pm\delta} M^1{}_V M^2{}_W M^3{}_X M^4{}_Y M^5{}_Z O_{2-c}$$

wherein

A is one or more alkali metals selected from sodium, potassium and lithium, preferably sodium;

$M^1$ comprises one or more redox active metals in oxidation state +2,

$M^2$ comprises a metal in oxidation state greater than 0 to less than or equal to +4;

$M^3$ comprises a metal in oxidation state +2;

$M^4$ comprises a metal in oxidation state greater than 0 to less than or equal to +4;

$M^5$ comprises a metal in oxidation state +3;

wherein

$$0 \leq \delta \leq 1;$$

$$V \text{ is } > 0;$$

$$W \text{ is } \geq 0;$$

$$X \text{ is } \geq 0;$$

$$Y \text{ is } \geq 0;$$

at least one of W and Y is > 0

$$Z \text{ is } \geq 0;$$

C is in the range $0 \leq c < 2$

wherein V, W, X, Y, Z and C are chosen to maintain electrochemical neutrality.

Ideally, metal $M^2$ comprises one or more transition metals, and is preferably selected from manganese, titanium and zirconium; $M^3$ is preferably one or more selected from magnesium, calcium, copper, tin, zinc and cobalt; $M^4$ comprises one or more transition metals, preferably selected from manganese, titanium and zirconium; and $M^5$ is preferably one or more selected from aluminium, iron, cobalt, tin, molybdenum, chromium, vanadium, scandium and yttrium.

A particularly preferred cathode electrode active material will be a nickelate-based material and/or a nickel-free layered oxide (for example, iron, copper and manganese based layered oxide).

A positive electrode active material with any crystalline structure may be used, however, preferably the structure will be O3 or P2 or a derivative thereof, but, specifically, it is also possible that the positive electrode active material will comprise a mixture of phases, i.e. it will have a non-uniform structure composed of several different crystalline forms. For example, the positive active material will comprise a compound with the general formula detailed above in a mixture of O3 and P2 phases. The ratio of O3:P2 phases is preferably 1 to 99: 99 to1.

Highly preferred positive electrode active materials comprise sodium and/or potassium-containing transition metal-containing compounds, with sodium transition metal nickelate compounds being especially preferred. Particularly favourable examples include alkali metal-layered oxides, single and mixed phase O3, P2 and P3 alkali metal-layered oxides, alkali metal-containing polyanion materials, oxymetallates, Prussion blue analogues and Prussian white analogues. Specific examples include O3/P2-$A_{0.833}Ni_{0.317}Mn_{0.467}Mg_{0.1}Ti_{0.117}O_2$, O3-$A_{0.95}Ni_{0.3167}Mn_{0.3167}Mg_{0.1583}Ti_{0.2083}O_2$ , P2-type $A_{2/3}Ni_{1/3}Mn_{1/2}Ti_{1/6}O_2$, P2-$A_{2/3}(Fe_{1/2}Mn_{1/2})O_2$, P'2-$A_{2/3}MnO_2$, P3 or P2-$A_{0.67}Mn_{0.67}Ni_{0.33}O_2$, $A_3V_2(PO_4)_3$, $AVPO_4F$, $AVPO_4F$, $A_3V_2(PO_4)_3$ $A_3V_2(PO_4)_2F_3$, $A_3V_2(PO_4)_2F_3$, $A_xFe_yMn_y(CN)_6 \cdot nH_2O$ ($0 \leq x,y,z \leq 2$; $0 \leq n \leq 10$), O3, P2 and/or P3- $A_xMn_yNi_zO_2$ ($0 \leq x \leq 1$ and $0 \leq y,z \leq 1$). $A_2Fe_2(SO_4)_3$, $A_2Ni_2SbO_6$, and $A_3Ni_2SbO_6$, where "A" is these compounds is one or more alkali metals selected from Li, Na and K, is preferably Na and/or K, and is most preferably Na.

Advantageously, the sodium-ion cells according to the present invention (including the sodium-ion cells used in the sodium-ion batteries of the present invention) may use an electrolyte in any form, i.e. solid, liquid or gel composition may be used. A non-aqueous electrolyte may be particularly preferred such as those described in WO 2020/240290 A1.

The electrolyte may include one or more sodium-containing salts, such as sodium tetrafluoroborate ($NaBF_4$), and/or sodium hexafluorophosphate ($NaPF_6$),

The electrolyte may include one or more fluorosulfonyl containing salts, such as NaTFSI.

Suitable examples include; 1) liquid electrolytes such as >0 to 10 molar alkali metal salt such as $NaPF_6$, $NaBF_4$, sodium bis(oxalate) (NaBOB), sodium triflate (NaOTf), NaTFSI, NaFSI, $LiPF_6$, $LiAsF_6$, $LiBF_4$, LiBOB, $LiClO_4$, LiFSi, LiTFSi, Li-triflate and mixtures thereof, in one or more solvents selected from ethylene carbonate (EC), diethyl carbonate (DEC), propylene carbonate (PC), (preferably as a mixture EC:DEC:PC in the ratio 1:2:1 wt./wt.), gamma butyrolactone (GBL) sulfolane, diglyme, triglyme, tetraglyme, dimethyl sulfoxide (DMSO), dioxolane, and mixtures thereof, all with-/without diluents such as different types of hydrofluoroethers such as 1,1,2,2-Tetrafluoroethyl 2,2,3,3-tetrafluoropropyl ether, 1,1,2,3,3,3-Hexafluoropropyl 2,2,2-Trifluoroethyl Ether or 1,1,2,2-Tetrafluoroethyl 2,2,2-trifluoroethyl ether. 2) gel electrolytes based on either one of the following matrix materials used singularly or in conjunction with each other; or 3) solid electrolytes such as NASICON-type such as $Na_3Zr_2Si_2PO_{12}$, sulphide-based such as $Na_3PS_4$ or $Na_3SbS_4$, hydride-based such as $Na_2B_{10}H_{10}$-$Na_2B_{12}H_{12}$ or $\beta$-alumina based such as $Na_2O.(8\text{-}11)Al_2O_3$ or the related $\beta$"-alumina based such as $Na_2O.(5\text{-}7)Al_2O_3$).

Known electrolyte additives such as 1,3-propanediolcyclic sulfate (PCS), P123 surfactant, Tris(trimethylsilyl) Phosphite (TMSP), Tris(trimethylsilyl) borate (TMSB), 1-Propene 1,3 Sultone, 1,3- Propanesultone, may also be included in the electrolyte, as can binders such as polyvinylidenefluoride (PVDF), polyvinylidenefluoride- hexafluoropropylene (PVDF-HFP), poly(methylmethacrylate) (PMMA), sodium carboxymethyl cellulose (CMC) and StyreneButadiene Rubber (SBR).

The phrase "sodium-ion cell" as used herein is to be interpreted as meaning any electrochemical cell and suitable examples include (but the invention is not limited to these examples) non-aqueous sodium-ion cells, aqueous sodium-ion cells, sodium-air cells, sodium-oxygen cells, rechargeable sodium metal-based cells and anode-free sodium cells. Such electrochemical cells may be utilised in any small or large-scale energy storage devices including but not limited to batteries, battery modules, battery packs, electrochemical devices and electrochromic devices. Batteries, battery modules and battery packs typically comprise one or more sodium-ion cells and some or all of these sodium-ion cells may be connected in series.

BRIEF DESCRIPTION OF THE DRAWINGS

The present invention will now be described with reference to the following figures in which:

FIGURE 1 shows the discharge profile for a full sodium-ion cell (A3PC802) discharged from 4.2 to 0V at a rate of C/5 and a rate of 2C as described in Example 1;

FIGURE 2 shows the discharge profile for a full sodium-ion cell (A3PC798) discharged from 4.2 to 0V at a rate of C/2 and discharged from 4.2 to -2V a rate of 2C as described in Example 2;

FIGURE 3 shows the discharge profile for a full sodium-ion cell (A3PC800) discharged from 4.2 to 0V at a rate of C/2, and a full sodium-ion cell (A3PC802) discharged from 4.2 to -1.58V at a rate of 2C as described in Example 3;

FIGURE 4 shows the discharge profile for a full sodium-ion cell (A3PC802) discharged from 4.2 to 0V at a rate of 2C, and discharged from 4.2 to -1.58V at a rate of 2C as described in Example 3;

FIGURE 5 shows the discharge profile for a full sodium-ion cell (A3PC765) discharged from 4.2 to about ~2.5 times its rated capacity (with respect to capacity it can deliver to 0 V) at a rate of C/2 as described in Example 4; and

FIGURE 6 shows the discharge profile for a full sodium-ion cell (A3PC765) discharged from 4.2 to 0V at a rate of C/2, after the discharge of Figure 5, as described in Example 4.

DETAILED DESCRIPTION

Electrochemical Results

A Na-ion electrochemical test cell is constructed as follows:
The positive electrode is prepared by solvent-casting a slurry of the active material (doped nickelate-containing O3/P2 $Na_{0.833}Ni_{0.317}Mn_{0.467}Mg_{0.1}Ti_{0.117}O_2$), conductive carbon, binder and solvent onto a substrate. The conductive carbon used is commercially available from Timcal Limited. Polyvinylidene fluoride (PVdF) is used as the binder, and N-methyl-2-pyrrolidone (NMP) is employed as the solvent. The slurry is cast onto carbon coated aluminium foil and heated until most of the solvent evaporates and an electrode film is formed. The electrode is then dried under dynamic vacuum at about 120 °C. The electrode film contained the following components, expressed in percent by weight: 89% active material, 5% conductive carbon, and 6% PVdF binder.

The negative electrode is prepared by solvent-casting a slurry of the hard carbon active material (for example commercially available from Kuraray Corporation), conductive carbon, binder and solvent onto a substrate. The conductive carbon used is commercially available for example from Timcal Limited. PVdF is used as the binder (unless otherwise stated in the specific examples), and N-Methyl-2-pyrrolidone (NMP) is employed as the solvent. The slurry is cast onto carbon coated aluminium foil and heated until most of the solvent evaporates and an electrode film is formed. The electrode is then dried further under dynamic vacuum at about 120°C. The negative electrode film contains the following components, expressed in percent by weight: 88% active material (hard carbon), 3% conductive carbon, and 9% PVdF binder.

Carbon coated aluminium materials used as the negative and/or positive current collectors are the SDX™ materials supplied by Showa Denko Inc or the En' Safe® current collectors supplied by ARMOR.

Generic Procedure to Make a Pouch Cell

Sodium ion pouch cells were built using active material electrodes, separator and electrolyte; aluminium tabs were connected to each of the electrodes and the cell was encased in a polymer-coated aluminium pouch. The three electrode Na-ion pouch cells used herein comprise square negative electrodes (4.8 cm$^2$) and square positive electrodes (4.0 cm$^2$) which are separated by either two layers of polyolefinic separators (such as Asahi Kasei's ND525 grade or the Celgard® 2500 grade) or one layer of polyolefinic separator and one layer of glass fibre (Whatman GF/A grade) separator, between which the third Na reference electrode is inserted. Then, an appropriate Na$^+$ based electrolyte is added to the cell (such as of the types described in the International PCT application published as WO 2020/240209 A1). The cell assembly is then hermetically sealed under vacuum within an Al-laminated pouch material ready for electrochemical testing.

Cell Testing

The cells are tested as follows, using Constant Current Cycling techniques (constant voltage applied at fully charged state, which is 4.2 V herein).

The cell is cycled at a given current density between pre-set voltage limits. A commercial battery cycler from Maccor Inc. (Tulsa, OK, USA) is used. On charge, alkali ions are extracted from the cathode active material. During discharge, alkali ions are re-inserted into the cathode active material. In the examples below, the first cycle between 4.2 - 0 V at either ±C/10 or ±C/5 (as detailed below) is an example of the conditioning/formation cycling.

## EXAMPLE 1 (NOT ACCORDING TO THE PRESENT INVENTION)

THE EFFECT OF DIFFERENT DISCHARGE RATES FROM 4.2V TO 0V ON "TRUE SOC" OF A CELL

An experiment was conducted to test the effect of different discharge rates on the true SOC of a sodium ion cell after a 30-minute rest period when discharging from 4.2V to 0V.

A single cell (A3PC802) was prepared in accordance with the generic procedure described above. In one discharge, the cell was discharged from 4.2 to 0V at a rate of C/5 (0.2C or 5-hour discharge), and in another discharge, the cell was discharged from 4.2V to 0V at a rate of 2C (C/0.5 or 30 minute discharge).

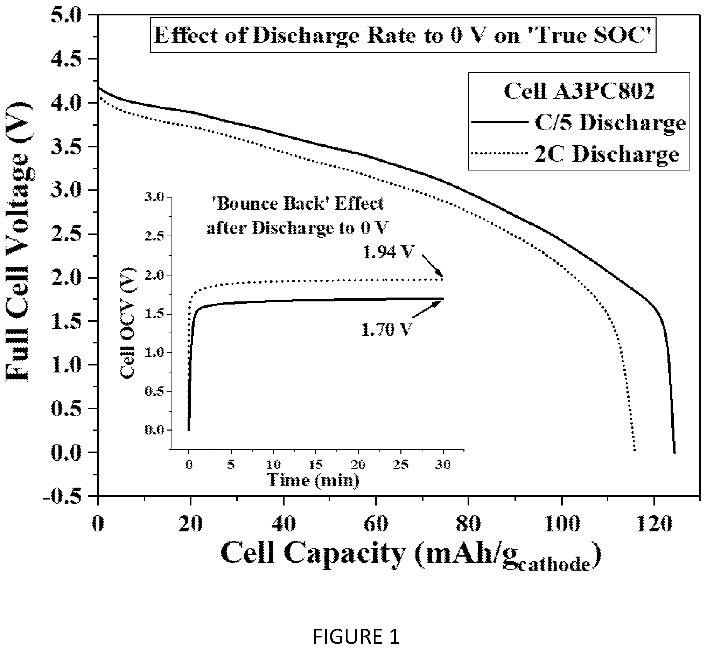

As illustrated by the results presented in Figure 1, it can be observed that the delivered specific capacity in units of mAh/g$_{cathode}$ at 0V (weight based on the amount of active material in the cathode) was lower at a rate of 2C, compared to the same discharge performed at a rate of C/5.

This (kinetic) effect is caused by more Na+ from the anode being able to insert into the cathode at a slower rate of discharge (i.e. C/5 rate), than at a faster rate of discharge (i.e. 2C rate).

However, what was particularly interesting in this experiment was observing the open circuit voltage of the cell at the end of a 30-minute rest period under open-circuit conditions immediately after the discharge operation to 0V (i.e. the galvanostatic discharge event). This voltage can be referred to as the "bounce back" open circuit voltage (OCV).

As shown by the inset of Figure 1, the "bounce back" OCV was greater for the cell discharged to 0V at rate of 2C than it was for the cell discharged to 0V at a rate of C/5. Therefore, the true SOC for the cell discharged to 0V at a rate of C/5 was found to be lower than the true SOC of the cell discharged to 0V at a rate of 2C (i.e. 1.70 V *vs* 1.94 V, respectively).

Thus, because 1.70 V is closer to 0 V, it can be concluded that a cell discharged to 0V at a rate of C/5 is more favourable in achieving a safer state than a comparative cell discharged to 0V at a rate of 2V. In other words, the cell discharged to 0V at a rate of C/5 has a lower true SOC than a cell discharged to 0V at a rate of 2C.

## EXAMPLE 2 (ACCORDING TO THE PRESENT INVENTION)

THE EFFECT OF OVERDISCHARGING ON THE TRUE SOC OF A SODIUM-ION CELL

Table 1 below presents some relevant cycling metrics of three-electrode cells that were discharged down to 0 V or overdischarge voltages, from 4.2 V. These cells were cycled as follows:

Cycle 1 = ±C/10 (conditioning/formation cycle).

Cycles 2 - 5: 4.2 - 0 V at ±C/2 with a 30 min rest after the 5th discharge (D5) to 0 V. The 30 min rest period is to gauge the 'bounce back' effect of the voltage of the cell.

Cycles 6 - 9: 4.2 - Overdischarged at ±C/2 with a 30 min rest after each overdischarged event.

Cycles 10 - 13: 4.2 - 0 V at ±C/2 again for comparison on cycling stability after the overdischarged cycles.

The key metrics in Table 1 are:

**D6 Overdisch V:** this shows the full cell voltage at the end of the overdischarged state.

**D6 - D5 Cap:** shows the capacity boost one can get from a Na-ion cell when overdischarged to that negative voltage, relative to being discharged just to 0 V.

**D5 - D6 OCV:** this compares the OCV of the cells after the 30 min rest after D5 (to 0 V) and D6 (to overdischarged V) discharging events. A negative value indicates that the 'true SOC' decreased during the overdischarging event.

**TABLE 1** Comparing effects of overdischarging sodium-ion cells to different negative voltages at $\pm$C/2 rate

| Cell | C/A | D5 Cap (mAh/gcathode) | D6 Cap (mAh/gcathode) | D6 Cathode, Anode Potential (V vs Na/Na+) | D6 Overdisch V (V) | D6 - D5 Cap (mAh/gcathode) | D5 OCV (V) | D6 OCV (V) | D5 - D6 OCV (mV) | D9 Cap (mAh/gcathode) | D10 Cap (mAh/gcathode) |
|---|---|---|---|---|---|---|---|---|---|---|---|
| A3PC794 | 2.17 | 121.89 | 122.94 | 1.56, 2.10 | **-0.54** | **1.05** | 1.764 | 1.727 | **-36.7** | 122.44 | 120.89 |
| A3PC795 | 2.19 | 121.12 | 123.16 | 1.47, 2.50 | **-1.04** | **2.04** | 1.772 | 1.706 | **-66.1** | 122.51 | 120.10 |
| A3PC796 | 2.16 | 121.83 | 125.12 | 2.08, 3.50 | **-1.42** | **3.28** | 1.769 | 1.667 | **-101.4** | 124.25 | 120.92 |
| A3PC797 | 2.22 | 122.07 | 125.61 | 1.77, 3.45 | **-1.68** | **3.53** | 1.753 | 1.641 | **-112.1** | 124.72 | 121.27 |
| A3PC798 | 2.16 | 121.76 | 127.30 | 1.59, 3.60 | **-2.01** | **5.54** | 1.771 | 1.605 | **-166** | 124.92 | 119.26 |
| A3PC799 | 1.63 | 121.40 | 123.29 | 1.69, 2.70 | **-1.01** | **1.89** | 1.831 | 1.777 | **-54.3** | 122.00 | 119.90 |
| A3PC800 | 1.87 | 123.07 | 124.80 | 1.78, 2.80 | **-1.02** | **1.72** | 1.83 | 1.775 | **-54.6** | 123.58 | 121.62 |

As illustrated by the results presented in Table 1 above, by subtracting the voltage observed following a 30-minute rest period (D5, column 8) after the discharge operation to 0V at a rate of $\pm$C/2, from the voltage observed following a 30-minute rest period (D6, column 9) after the discharge operation to the overdischarge voltage as indicated above (column 6) at $\pm$C/2, in each case, a negative voltage was observed (column 10). Therefore, the true SOC for each cell was found to decrease as a consequence of discharging the cell to a voltage of less than -0.1V.

Thus, an effect arising from the present invention, and particularly from discharging the sodium-ion cell to a voltage of less than -0.1V, is that the true state of charge from the resulting sodium-ion cell is lower than if a comparative sodium-ion cell were to be discharged to a voltage of -0.1V or greater (i.e. to a voltage of 0V).

Furthermore, when discharging the cell from 4.2V to 0V after the over discharging event, the capacity values (D10, column 12) show that the capacity fade is extremely low compared to the capacity values prior to the over discharging event (D5, column 3). Furthermore, over the course of the four overdischarge cycles for each cell, the capacity values were extremely similar (seen by a comparison of D6, column 4, and D9, column 11). Therefore, clearly discharging the cell to a voltage of less than -0.1V does not cause any substantial degradation in cell performance. The results based on a three-electrode sodium-ion cells in Table 1, are also directly transferable to two-electrode sodium-ion cells used in, for instance, any commercial application, and thus the same conclusions can be made.

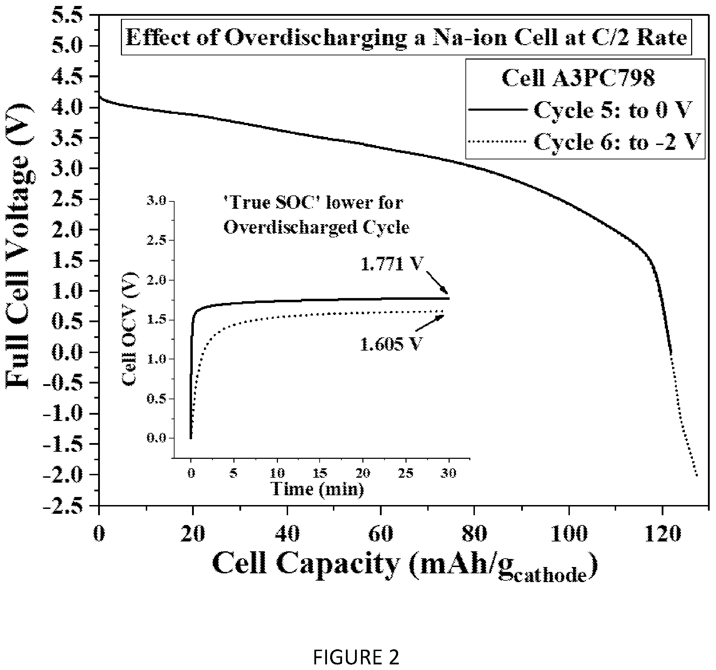

Figure 2 shows the D5 and D6 discharge cycling profiles of cell A3PC798 as indicated in Table 1. The inset shows the OCV 'bounce back' effect over a 30-minute rest period under open circuit conditions. It can be seen that overdischarging cell A3PC798 to -2.01 V (column 6, Table 1) resulted in a capacity increase of 5.54 mAh/$g_{cathode}$ (column 7, Table 1), and the 'true SOC' of the cell was about 0.166 V lower after the overdischarged event. Furthermore, from an inspection of the D6 (column 4) and D9 (column 11) capacity values in Table 1, it can be seen that the sodium-ion cells show stable cycling if overdischarged to negative voltages such as -1 V or even -2 V (since these are three-electrode cells, Table 1 also provides the potentials of the cathode and anode at the end of the overdischarged D6 cycle).

Very advantageously, when subtracting the capacity achieved by discharging the cell from 4.2V to 0V (column 3) from the capacity achieved by discharging the cell from 4.2V to the over discharged voltage (column 4), in each case, an increase in cell capacity is observed (column 7) - i.e., from about 1 to 5.5 mAh/$g_{cathode}$, which is ~1 to ~4.6 % of the cell capacity. In other words, at the Vmin of the respective overdischarged cells (when the current was still being drawn), these cells showed negative instantaneous SOC values between ~ -1 to ~ -4.6 % SOC. E.g. for A3PC798: (5.54/121.76)*100% = -4.55% SOC

Thus, another effect arising from the present invention, and particularly from discharging the sodium-ion cell to a voltage of less than -0.1V, is that the capacity from the resulting sodium-ion cell is greater than if a comparative sodium-ion cell were to be discharged to a voltage of -0.1V or greater (i.e. to a voltage of 0V).

The Applicant understands that this increase in capacity arises from the Na$^+$ that was present in the anode, but was unable to be 'accessed' within the normal operational window of a sodium-ion cell (such as 4.2 - 0 V). Therefore, by overdischarging the cell according to the present invention (i.e. to a voltage of less than -0.1V), these Na$^+$ are now forced to shuttle from the anode to the cathode, thus contributing to reversible capacity.

Thus, a further effect arising from the present invention, and particularly from discharging the sodium-ion cell to a voltage of less than -0.1V is that it is possible to achieve a negative state of charge. Cell capacity that was unable to be accessed prior to the present invention, is now able to be accessed because of the present invention.

Thus, the Applicant has surprisingly discovered that by discharging a sodium-ion cell to a voltage of less than -0.1V, the cell is made safer, and subsequent cell performance, such as cycling stability, is not compromised. Access to further cell capacity is also achieved according to the present invention.

### EXAMPLE 3 (ACCORDING TO THE PRESENT INVENTION)

### INVESTIGATION INTO DISCHARGE RATE ON A SODIUM-ION CELL

The purpose of this experiment was to determine whether a sodium-ion cell can be made to arrive at a lower 'true SOC' at faster rates of discharge. These three-electrode cells were cycled as follows:

Cycle 1 = $\pm$C/5 (conditioning/formation cycle).
Cycles 2 - 4: 4.2 - 0 V at +C/2 (charge)/-2C (discharge) with a 30 min rest after each discharge cycle to 0 V. The 30 min rest period is to gauge the 'bounce back' effect of the voltage of the cell.
Cycles 5 - 7: 4.2 - overdischarged at +C/2 (charge)/-2C (discharge) with a 30 min rest after each overdischarged event. Using data from these cycles, one can compare the OCV of the cell in the relaxed state (open circuit conditions) after the overdischarged event, relative to the OCV after a 30 min rest after discharge at 0 V. A lower OCV after overdischarge will provide proof that the 'true SOC' of the cell decreases after overdischarging.
Cycles 8 - 10: 4.2 - 0 V at +C/2 (charge)/-2C (discharge) again (with a 30 min rest after each discharge cycle) for comparison on cycling stability after the overdischarged cycles.

**Table 2** Comparing effects of overdischarging Na-ion Cells to different negative voltages at 2C rate

| Cell | C/A | D4 Cap (mAh/gcathode) | D5 Cap (mAh/gcathode) | D5 Cathode, Anode Potential (V vs Na$^+$) | D5 Overdisch V (V) | D5 - D4 Cap (mAh/gcathode) | D4 OCV (V) | D5 OCV (V) | D4 - D5 OCV (mV) | D7 Cap (mAh/g$_{cathode}$) | D8 Cap (mAh/gcathode) |
|---|---|---|---|---|---|---|---|---|---|---|---|
| A3PC801 | 2.39 | 114.53 | 117.00 | 2.08, 3.51 | -1.43 | 2.48 | 1.988 | 1.908 | - 80.0 | 116.06 | 112.94 |
| A3PC802 | 1.92 | 115.83 | 120.05 | 2.07, 3.65 | -1.58 | 4.22 | 1.943 | 1.831 | -112 | 119.32 | 115.43 |
| A3PC803 | 1.93 | 114.77 | 118.19 | 2.36, 3.80 | -1.44 | 3.42 | 1.973 | 1.878 | - 95.9 | 117.44 | 114.12 |

From an inspection of Table 2, and in an analogous manner to the results presented in Table 1, it can again be concluded that discharging the sodium-ion cell to a voltage of less than - 0.1V results in a sodium-ion cell having a lower true state of charge than a comparative sodium-ion cell discharged to a voltage of -0.1V or greater (i.e. to a voltage of 0V). This is evidenced by a negative voltage being observed for each cell in column 10. Again, this value was calculated by subtracting the voltage observed following a 30-minute rest period (D4, column 8) after the discharge operation to 0V, from the voltage observed following a 30-minute rest period (D5, column 9) after the discharge operation to the overdischarge voltage as indicated above (column 6).

However, the difference between the results presented in Table 1 and those presented in Table 2, is that the cells in Table 1 were discharged of at a rate of C/2 (0.5C or 2 hours), and the cells in Table 2 were discharged at a rate of 2C (C/0.5 or 30 mins). Therefore, the cells in Table 2 were discharged 4 times faster than those discharged in Table 1.

When discharging the cell from 4.2V to 0V after the overdischarging event at a rate of 2C, the capacity values (D8, column 12) show that the capacity fade is extremely low compared to the capacity values prior to the over discharging event (D4, column 3). Furthermore, over the course of the three overdischarge cycles for each cell, the capacity values were extremely similar (seen by a comparison of D5, column 4, and D7, column 11). Therefore, clearly, discharging the cell to a voltage of less than -0.1V a rate of C/<2 (e.g 2C) does not cause any substantial degradation in cell performance. This is particularly advantageous because it means that a safe cell can be prepared quickly.

The results based on a three-electrode sodium-ion cells in Table 2, are also directly transferable to two-electrode sodium-ion cells used in, for instance, any commercial application, and thus the same conclusions can be made.

Furthermore, by comparing sodium-ion cells of similar cell design (such as the C/A mass balance) between Table 1 and Table 2, the application of faster discharge rates to overdischarged voltages can be further appreciated.

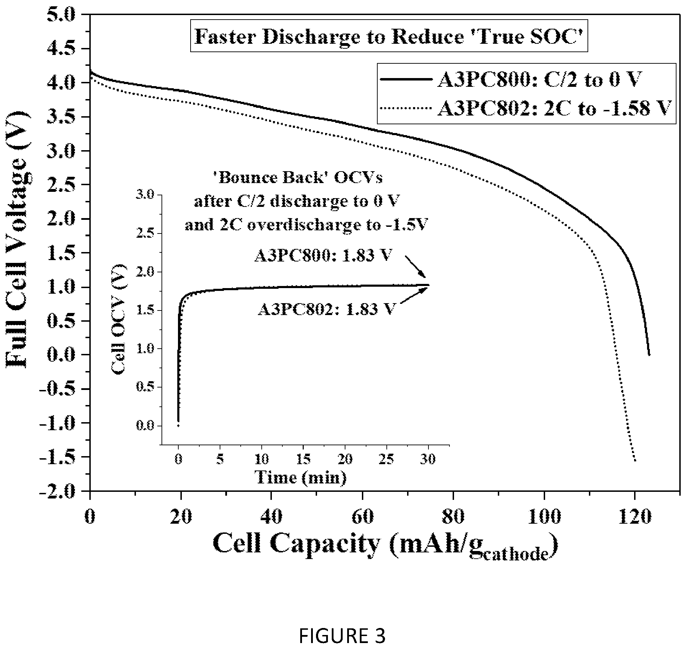

As an example, Figure 3 compares a sodium-ion cell discharged from 4.2V to 0V at a discharge rate of C/2 (cell A3PC800 as shown in Table 1: full discharge in 112.3 min) with a comparable sodium-ion cell discharged from 4.2V to -1.58V at a discharge rate of 2C (cell A3PC802 of Table 2: full discharge in just 27.7 min).

At 0V, it was expected that A3PC802 would show a lower capacity than A3PC800 due the kinetic effects presented in Example 1.

However, what was what surprising, was that when A3PC802 was discharged to -1.58V at a discharge rate of 2C, the resulting capacity was comparable to that of A3PC800 which was discharged to 0V at a discharge rate of C/2: A3PC800 - 123.07 mAh/gcathode (column 3, Table 1), A3PC802 - 120.05 mAh/gcathode (column 4, Table 2).

However, particularly surprising, and as shown by the inset of Figure 3, was that the 'true SOC' of cell A3PC802 (i.e. 1.831V after a 30 minute period - column 9, Table 2) was comparable to that of cell A3PC800 (i.e. 1.83V after a 30 minute period - column 8, Table 1).

Therefore, in addition to the surprising finding that a sodium-ion cell can be safely discharged to a voltage of less than -0.1V as discussed above, and as supported by Example 2, further surprisingly, faster rates of discharge can also be safely used to dissipate all, or practically all of the charge from the resulting sodium-ion cell as supported by Example 3. Thus, a sodium-ion cell discharged to a voltage of less than -0.1V at a discharge rate of 2C is safer or at least equal to the safety of a comparative sodium-ion cell discharged to a voltage of 0V (i.e. -0.1V or greater) at a discharge rate of C/2. In other words, a cell discharged to -1.58V at a rate of 2C has a lower or equal true SOC than a cell discharged to 0V at a rate of C/2. Therefore, a commercial manufacturer, for instance, can prepare a particularly safe cell for storage and/or transportation and/or maintenance, but without the process being performed over a long period of time.

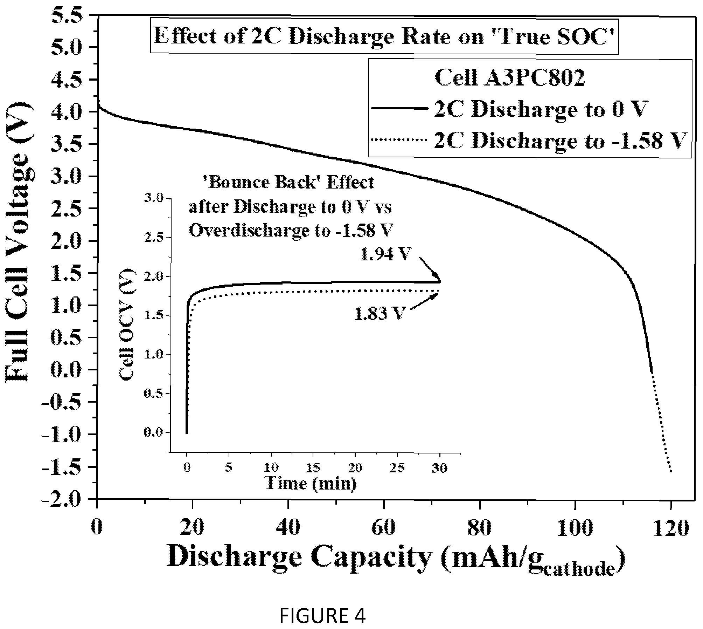

Some further conclusions can also be made with reference to Figure 4.

Figure 4 compares the discharge of A3PC802 from 4.2V to 0V at a discharge rate of 2C with the discharge of A3PC802 from 4.2V to -1.58V at the same discharge rate of 2C.

As illustrated in Figure 4, the "true SOC" upon discharge from 4.2V to 0V was found to be 1.94V, whereas the "true SOC" discharge from 4.2V to -1.58V was found to be 1.83V. Therefore, these findings further conclude that a sodium-ion cell discharged to a voltage of less than -0.1V at a discharge rate of C/<2, is safer or at least equal to the safety of a comparative sodium-ion cell discharged to a voltage of 0V (i.e., -0.1V or greater).

The implications of these results are profound because it demonstrates that if a sodium-ion cell is to be rendered safe quickly, it is actually beneficial to discharge the sodium-ion cell at a faster rate to overdischarge voltages (negative voltages) as opposed to discharging it to just 0 V.

## EXAMPLE 4 (ACCORDING TO THE PRESENT INVENTION)

## INVESTIGATION INTO THE HAZARDS ASSOCIATED WITH SIGNIFICANT OVERDISCHARGE OF A SODIUM-ION CELL

Examples 2 and 3 demonstrate that sodium-ion cells have the ability to be overdischarged to voltages of less than -0.1V without compromising future cell performance. However, the Applicant has found that sodium-ion cells, in some circumstances, cannot be overdischarged indiscriminately, and there are limits beyond which, a sodium-ion cell's future performance would suffer if overdischarged to a significant extent.

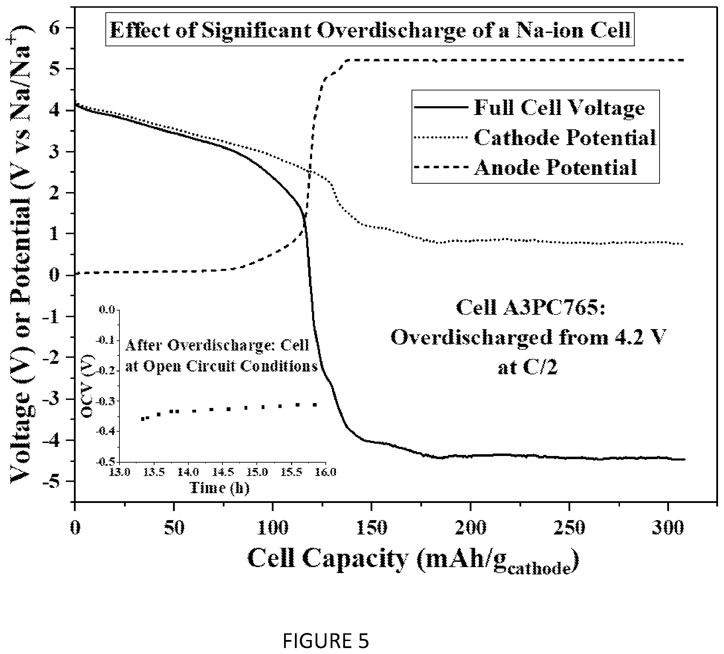

Figure 5 presents three-electrode cycling curves of cell A3PC765 which had the same cell design as cells A3PC794 - A3PC798 shown in Table 1 (the C/A mass balance of A3PC765 was 2.28), and cycled at C/2 discharge rate from 4.2 V, to ~2.5 times its rated capacity (with respect to capacity it can deliver to 0 V) to simulate extreme overdischarge conditions.

As can be seen, beyond 0 V, the anode potential steadily kept increasing, before reaching very high potentials in excess of 5.2 V vs Na/Na+: such potentials are well beyond the oxidation stability limits of carbonate-ester electrolytes and it is no surprise that the anode's potential stayed at such high values upon continued discharge (due to continuous electrolyte decomposition).

Simultaneously, the cathode potential kept decreasing steadily, with notable disturbances in its cycling profile. It is likely that oxidized electrolyte species, generated at the high potential anode, might have migrated to the cathode and caused such disturbances. As shown in the inset of Figure 5, the OCV of this cell was measured after letting the cell rest for ~13 h after the overdischarged event. As can be seen, the extreme overdischarging resulted in a negative true state of charge which was maintained for up to 16 hours after the extreme overdischarge event.

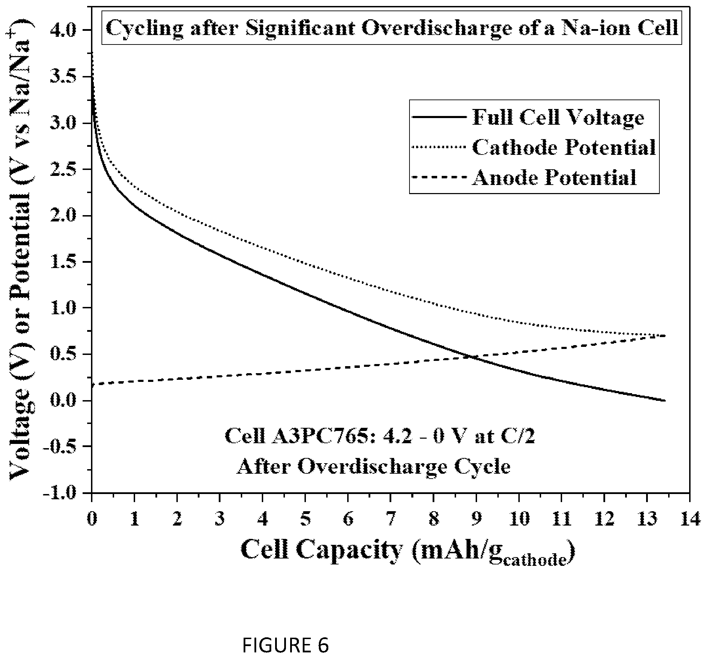

Figure 6 further presents the cycling curve of A3PC765 from 4.2V to 0V at a discharge rate of C/2 after the overdischarging event of Figure 5.

As can be seen from Figure 6, when A3PC765 was subsequently cycled between 4.2 to 0 V at a discharge rate of C/2, the cathode could now only deliver only 13.4 mAh/g, or just ~11 % of the capacity (118.6 mAh/g) it could when cycled between 4.2 to 0V at a discharge rate of C/2, prior to the overdischarging event of Figure 5.

Therefore, these results of Example 4 conclude that whilst sodium-ion cells can be overdischarged to negative voltages, there are limits beyond which, a sodium-ion cell's future performance would suffer if overdischarged to a significant extent. An overdischarge limit could be, for instance, -5V, optionally -4.5V, optionally -2.5V as disclosed herein.

**Claims**

1. A process for providing a sodium-ion cell which is in a state of charge from about 20% or less and which is capable of safe storage and/or transportation and/or maintenance, comprising the steps:

   a) providing a sodium-ion cell comprising a positive electrode comprising a positive electrode material, a positive electrode current collector, a negative electrode comprising a negative electrode material, a negative electrode current collector and an electrolyte, wherein the positive and negative electrode current collectors comprise aluminium;
   b) subjecting the sodium-ion cell provided in step a) to one or more discharge operations to a minimum cell operating voltage (cell Vmin) of less than -0.1V, at a discharge rate of C/<10; and
   c) maintaining the sodium-ion cell at a voltage of 1V or less.

2. The process according to claim 1, in which step b) comprises discharging the sodium-ion cell provided in step a) to a cell Vmin of from less than -0.1V to about -5.0V; or in which step b) comprises discharging the sodium-ion cell provided in step a) to a cell Vmin of from less than -0.1V to about -2.5V; or in which step b) comprises discharging the sodium-ion cell provided in step a) to a cell Vmin of from less than -0.1V to about - 1.7V.

3. The process according to any one of claims 1 to 2, in which step a) comprises a sodium-ion cell that has been assigned a maximum operating voltage (cell Vmax) from about 1V to about 5.0V.

4. The process according to any one of claims 1 to 3, in which step a) comprises a sodium-ion cell that is capable of being charged to the conventional and/or expected charge capacity of the cell; optionally in which the sodium-ion cell is capable of being charged to from ≥80% to 100% of a cell Vmax from about 1V to about 5.0V.

5. The process according to any one of claims 1 to 4, in which step a) comprises a sodium-ion cell that is not capable of being charged to the conventional and/or expected charge capacity of the cell; optionally in which the sodium-ion cell is not capable of being charged to from ≥80% to 100% of a cell Vmax from about 1V to about 5.0V.

6. The process according to any one of claims 1 to 5, in which step a) comprises a sodium-ion cell that has been subject to one or more charge and discharge operations; optionally in which step a) comprises a pristine or a non-pristine cell, wherein a pristine cell is a cell that has been subject to a conditioning process but not been subsequently used with an application device, and wherein a non-pristine cell is a cell that has been subject to a conditioning process and then subsequently used with an application device.

**7.** The process according to any one of claims 1 to 6, in which the discharging at step b) is at a discharge rate of from C/<10 to C/≥0.1.

**8.** The process according to any of claims 1 to 7, in which step c) comprises maintaining the sodium-ion cell at a voltage of from about -1.7 V to about 1V and/or the use of a removable shorting device.

**9.** A process for providing a sodium-ion battery which is in a state of charge from about 20% or less and which is capable of safe storage and/or transportation and/or maintenance, comprising the steps:

a) providing a sodium-ion battery comprising one or more sodium-ion cells according to step a) of claim 1;
b) subjecting the sodium-ion battery provided in step a) to one or more discharge operations to a minimum battery operating voltage (battery Vmin) of less than -0.1V, at a discharge rate of C/<10; and
c) maintaining the sodium-ion battery at a voltage of 1V or less.

**10.** The process according to claim 9, in which step b) comprises discharging the sodium-ion battery to a battery Vmin of from less than -0.1V to about -5.0V; or in which step b) comprises discharging the sodium-ion battery to a battery Vmin of from less than -0.1V to about -2.5V; or in which step b) comprises discharging the sodium-ion battery to a battery Vmin of from less than -0.1V to about -1.7V.

**11.** The process according to any one of claims 9 to 10 in which step a) comprises a sodium-ion battery that is capable of being charged to the conventional and/or expected charge capacity of the battery; optionally, in which the sodium-ion battery is capable of being charged to from ≥80% to 100% of a battery Vmax.

**12.** The process according to any one of claims 9 to 10 in which step a) comprises a sodium-ion battery that is not capable of being charged to the conventional and/or expected charge capacity of the battery; optionally in which the sodium-ion battery is not capable of being charged to from ≥80% to 100% of a battery Vmax.

**13.** The process according to any one of claims 9 to 12, in which all of the one or more sodium-ion cells provided in step a) have been subject to one or more charge and discharge operations; optionally in which step a) comprises a pristine or a non-pristine battery, wherein a battery is pristine when all of the sodium-ion cells that form the battery have been subject to a conditioning process but none of such cells have been subsequently used with an application device, and wherein a battery is non-pristine when all of the sodium-ion cells that form the battery have been subject to a conditioning process, and one or more of such cells have subsequently been used with an application device.

**14.** The process according to any one of claims 9 to 13, in which the discharging at step b) is at a discharge rate of from C/<10 to C/≥0.1.

**15.** The process according to any one of claims 9 to 14, in which step c) comprises maintaining the sodium-ion battery at a voltage of from about -1.7V to about 1V and/or the use of a removable shorting device.

**Patentansprüche**

**1.** Verfahren zum Bereitstellen einer Natrium-Ionen-Zelle, die sich in einem Ladezustand von etwa 20 % oder weniger befindet und die in der Lage ist, sicher gelagert und/oder transportiert und/oder gewartet zu werden, umfassend die folgenden Schritte:

a) Bereitstellen einer Natrium-Ionen-Zelle, umfassend eine positive Elektrode, umfassend ein positives Elektrodenmaterial, einen positiven Elektrodenstromkollektor, eine negative Elektrode, umfassend ein negatives Elektrodenmaterial, einen negativen Elektrodenstromkollektor und einen Elektrolyten, wobei der positive und der negative Elektrodenstromkollektor Aluminium umfassen;
b) Unterziehen der in Schritt a) bereitgestellten Natrium-Ionen-Zelle einem oder mehreren Entladevorgängen einer minimalen Zellbetriebsspannung (Zelle Vmin) von weniger als -0,1 V bei einer Entladungsrate von C/<10; und
c) Halten der Natrium-Ionen-Zelle auf einer Spannung von 1 V oder weniger.

**2.** Verfahren nach Anspruch 1, wobei Schritt b) ein Entladen der in Schritt a) bereitgestellten Natrium-Ionen-Zelle in eine Zelle Vmin von weniger als -0,1 V bis etwa -5,0 V umfasst; oder wobei Schritt b) ein Entladen der in Schritt a) bereitgestellten Natrium-Ionen-Zelle in eine Zelle Vmin von weniger als -0,1 V bis etwa -2,5 V umfasst; oder wobei Schritt b) ein Entladen der in Schritt a) bereitgestellten Natrium-Ionen-Zelle in eine Zelle Vmin von weniger als -0,1 V bis etwa -1,7 V umfasst.

3. Verfahren nach einem der Ansprüche 1 bis 2, wobei Schritt a) eine Natrium-Ionen-Zelle umfasst, der eine maximale Betriebsspannung (Zellen-Vmax) von etwa 1 V bis etwa 5,0 V zugewiesen wurde.

4. Verfahren nach einem der Ansprüche 1 bis 3, wobei Schritt a) eine Natrium-Ionen-Zelle umfasst, die in der Lage ist, auf die konventionelle und/oder erwartete Ladekapazität der Zelle geladen zu werden; wobei die Natrium-Ionen-Zelle optional in der Lage ist, auf ≥80 % bis 100 % einer Zellen-Vmax von etwa 1 V bis etwa 5,0 V geladen zu werden.

5. Verfahren nach einem der Ansprüche 1 bis 4, wobei Schritt a) eine Natrium-Ionen-Zelle umfasst, die nicht in der Lage ist, auf die konventionelle und/oder erwartete Ladekapazität der Zelle geladen zu werden; wobei die Natrium-Ionen-Zelle optional nicht in der Lage ist, auf ≥80 % bis 100 % einer Zellen-Vmax von etwa 1 V bis etwa 5,0 V geladen zu werden.

6. Verfahren nach einem der Ansprüche 1 bis 5, wobei Schritt a) eine Natrium-Ionen-Zelle umfasst, die einem oder mehreren Lade- und Entladevorgängen unterzogen wurde; optional wobei Schritt a) eine unberührte oder eine nicht unberührte Zelle umfasst, wobei eine unberührte Zelle eine Zelle ist, die einem Konditionierungsprozess unterzogen wurde, aber nicht anschließend mit einer Applikationsvorrichtung verwendet wurde, und wobei eine nicht unberührte Zelle eine Zelle ist, die einem Konditionierungsprozess unterzogen wurde und dann anschließend mit einer Applikationsvorrichtung verwendet wurde.

7. Verfahren nach einem der Ansprüche 1 bis 6, wobei das Entladen in Schritt b) mit einer Entladungsrate von C/<10 bis C/≥0,1 erfolgt.

8. Verfahren nach einem der Ansprüche 1 bis 7, wobei Schritt c) ein Halten der Natrium-Ionen-Zelle auf einer Spannung von etwa -1,7 V bis etwa 1 V und/oder die Verwendung einer abnehmbaren Kurzschlussvorrichtung umfasst.

9. Verfahren zum Bereitstellen einer Natrium-Ionen-Batterie, die sich in einem Ladezustand von etwa 20 % oder weniger befindet und die in der Lage ist, sicher gelagert und/oder transportiert und/oder gewartet zu werden, umfassend die folgenden Schritte:

   a) Bereitstellen einer Natrium-Ionen-Batterie, umfassend eine oder mehrere Natrium-Ionen-Zellen gemäß Schritt a) von Anspruch 1;
   b) Unterziehen der in Schritt a) bereitgestellten Natrium-Ionen-Batterie einem oder mehreren Entladevorgängen einer minimalen Batteriebetriebsspannung (Batterie-Vmin) von weniger als -0,1 V bei einer Entladungsrate von C/<10; und
   c) Halten der Natrium-Ionen-Batterie auf einer Spannung von 1 V oder weniger.

10. Verfahren nach Anspruch 9, wobei Schritt b) ein Entladen der Natrium-Ionen-Batterie an eine Batterie Vmin von weniger als -0,1 V bis etwa -5,0 V umfasst; oder wobei Schritt b) ein Entladen der Natrium-Ionen-Batterie an eine Batterie Vmin von weniger als -0,1 V bis etwa -2,5 V umfasst; oder wobei Schritt b) Entladen der Natrium-Ionen-Batterie an eine Batterie Vmin von weniger als -0,1 V bis etwa -1,7 V umfasst.

11. Verfahren nach einem der Ansprüche 9 bis 10, wobei Schritt a) eine Natrium-Ionen-Batterie umfasst, die in der Lage ist, auf die konventionelle und/oder erwartete Ladekapazität der Batterie geladen zu werden; wobei die Natrium-Ionen-Batterie optional in der Lage ist, auf ≥80 % bis 100 % einer Batterie-Vmax geladen zu werden.

12. Verfahren nach einem der Ansprüche 9 bis 10, wobei Schritt a) eine Natrium-Ionen-Batterie umfasst, die nicht in der Lage ist, auf die konventionelle und/oder erwartete Ladekapazität der Batterie geladen zu werden; wobei die Natrium-Ionen-Batterie optional nicht in der Lage ist, auf ≥80 % bis 100 % einer Batterie-Vmax geladen zu werden.

13. Verfahren nach einem der Ansprüche 9 bis 12, wobei alle von der einen oder den mehreren in Schritt a) bereitgestellten Natrium-Ionen-Zellen einem oder mehreren Lade- und Entladevorgängen unterzogen wurden; optional wobei Schritt a) eine unberührte oder eine nicht unberührte Batterie umfasst, wobei eine Batterie unberührt ist, wenn alle der Natrium-Ionen-Zellen, die die Batterie bilden, einem Konditionierungsprozess unterzogen wurden, aber keine dieser Zellen anschließend mit einer Applikationsvorrichtung verwendet wurde, und wobei eine Batterie nicht unberührt ist, wenn alle der Natrium-Ionen-Zellen, die die Batterie bilden, einem Konditionierungsprozess unterzogen wurden, und eine oder mehrere dieser Zellen anschließend mit einer Applikationsvorrichtung verwendet wurden.

14. Verfahren nach einem der Ansprüche 9 bis 13, wobei das Entladen in Schritt b) mit einer Entladungsrate von C/<10 bis C/≥0,1 erfolgt.

15. Verfahren nach einem der Ansprüche 9 bis 14, wobei Schritt c) ein Halten der Natrium-Ionen-Batterie auf einer Spannung von etwa -1,7 V bis etwa 1 V und/oder die Verwendung einer abnehmbaren Kurzschlussvorrichtung umfasst.

**Revendications**

1. Procédé de fourniture d'un élément sodium-ion qui est dans un état de charge d'environ 20 % ou moins et qui est apte au stockage et/ou au transport et/ou à l'entretien en toute sécurité, comprenant les étapes suivantes :

   a) la fourniture d'un élément sodium-ion comprenant une électrode positive comprenant un matériau d'électrode positive, un collecteur de courant d'électrode positive, une électrode négative comprenant un matériau d'électrode négative, un collecteur de courant d'électrode négative et un électrolyte, dans lequel les collecteurs de courant d'électrodes positive et négative comprennent de l'aluminium ;
   b) la soumission de l'élément sodium-ion fourni à l'étape a) à une ou plusieurs opérations de décharge à une tension de fonctionnement minimale d'élément (Vmin d'élément) inférieure à -0,1 V, à un vitesse de décharge de C/<10 ; et
   c) le maintien de l'élément sodium-ion à une tension inférieure ou égale à 1 V.

2. Procédé selon la revendication 1, dans lequel l'étape b) comprend la décharge de l'élément sodium-ion fourni à l'étape a) à une Vmin d'élément de moins de -0,1 V à environ -5,0 V ; ou dans lequel l'étape b) comprend la décharge de l'élément sodium-ion fourni à l'étape a) à une Vmin d'élément de moins de -0,1 V à environ -2,5 V ; ou dans lequel l'étape b) comprend la décharge de l'élément sodium-ion fourni à l'étape a) à une Vmin d'élément de moins de -0,1 V à environ -1,7 V.

3. Procédé selon l'une quelconque des revendications 1 à 2, dans lequel l'étape a) comprend un élément sodium-ion auquel a été attribuée une tension de fonctionnement maximale (Vmax d'élément) d'environ 1 V à environ 5,0 V.

4. Procédé selon l'une quelconque des revendications 1 à 3, dans lequel l'étape a) comprend un élément sodium-ion qui peut être chargé à la capacité de charge classique et/ou attendue de l'élément ; éventuellement dans lequel l'élément sodium-ion peut être chargé de ≥80 % à 100 % d'une Vmax d'élément d'environ 1 V à environ 5,0 V.

5. Procédé selon l'une quelconque des revendications 1 à 4, dans lequel l'étape a) comprend un élément sodium-ion qui ne peut pas être chargé à la capacité de charge classique et/ou attendue de l'élément ; éventuellement dans lequel l'élément sodium-ion ne peut pas être chargé de ≥80 % à 100 % d'une Vmax d'élément d'environ 1 V à environ 5,0 V.

6. Procédé selon l'une quelconque des revendications 1 à 5, dans lequel l'étape a) comprend un élément sodium-ion qui a été soumis à une ou plusieurs opérations de charge et de décharge ; éventuellement, dans lequel l'étape a) comprend un élément intact ou un élément non intact, dans lequel un élément intact est un élément qui a été soumis à un procédé de conditionnement mais qui n'a pas été ensuite utilisé avec un dispositif d'application, et dans lequel un élément non intact est un élément qui a été soumis à un procédé de conditionnement, puis utilisé avec un dispositif d'application.

7. Procédé selon l'une quelconque des revendications 1 à 6, dans lequel la décharge à l'étape b) s'effectue à une vitesse de décharge de C/<10 à C/≥0,1.

8. Procédé selon l'une quelconque des revendications 1 à 7, dans lequel l'étape c) comprend le maintien de l'élément sodium-ion à une tension d'environ -1,7 V à environ 1 V et/ou l'utilisation d'un dispositif de court-circuit amovible.

9. Procédé de fourniture d'une batterie sodium-ion qui est dans un état de charge d'environ 20 % ou moins et qui est apte au stockage et/ou au transport et/ou à l'entretien en toute sécurité, comprenant les étapes suivantes :

a) la fourniture d'une batterie sodium-ion comprenant un ou plusieurs éléments sodium-ion selon l'étape a) de la revendication 1 ;

b) la soumission de la batterie sodium-ion fournie à l'étape a) à une ou plusieurs opérations de décharge à une tension de fonctionnement minimale de batterie (Vmin de batterie) inférieure à -0,1 V, à un vitesse de décharge de C/<10 ; et

c) le maintien de la batterie sodium-ion à une tension inférieure ou égale à 1 V.

10. Procédé selon la revendication 9, dans lequel l'étape b) comprend la décharge de la batterie sodium-ion à une Vmin de batterie de moins de -0,1 V à environ -5,0 V ; ou dans lequel l'étape b) comprend la décharge de la batterie sodium-ion à une Vmin de batterie de moins de -0,1 V à environ -2,5 V ; ou dans lequel l'étape b) comprend la décharge de la batterie sodium-ion à une Vmin de batterie de moins de -0,1 V à environ -1,7 V.

11. Procédé selon l'une quelconque des revendications 9 à 10, dans lequel l'étape a) comprend une batterie sodium-ion qui peut être chargée à la capacité de charge classique et/ou attendue de la batterie ; éventuellement, dans lequel la batterie sodium-ion peut être chargée de ≥80 % à 100 % d'une Vmax de batterie.

12. Procédé selon l'une quelconque des revendications 9 à 10, dans lequel l'étape a) comprend une batterie sodium-ion qui ne peut pas être chargée à la capacité de charge classique et/ou attendue de la batterie ; éventuellement, dans lequel la batterie sodium-ion ne peut pas être chargée de ≥80 % à 100 % d'une Vmax de batterie.

13. Procédé selon l'une quelconque des revendications 9 à 12, dans lequel tous les un ou plusieurs éléments sodium-ion fournis à l'étape a) ont été soumis à une ou plusieurs opérations de charge et de décharge ; éventuellement, dans lequel l'étape a) comprend une batterie intacte ou non intacte, dans lequel une batterie est intacte lorsque tous les éléments sodium-ion qui forment la batterie ont été soumis à un procédé de conditionnement mais qu'aucun de ces éléments n'a été ensuite utilisé avec un dispositif d'application, et dans lequel une batterie est non intacte lorsque tous les éléments sodium-ion qui forment la batterie ont été soumis à un procédé de conditionnement, et qu'un ou plusieurs de ces éléments ont ensuite été utilisés avec un dispositif d'application.

14. Procédé selon l'une quelconque des revendications 9 à 13, dans lequel la décharge à l'étape b) s'effectue à une vitesse de décharge de C/<10 à C/≥0,1.

15. Procédé selon l'une quelconque des revendications 9 à 14, dans lequel l'étape c) comprend le maintien de la batterie sodium-ion à une tension d'environ -1,7 V à environ 1 V et/ou l'utilisation d'un dispositif de court-circuit amovible.

FIGURE 1

EP 4 374 447 B1

FIGURE 2

FIGURE 3

EP 4 374 447 B1

FIGURE 4

EP 4 374 447 B1

FIGURE 5

EP 4 374 447 B1

Cycling after Significant Overdischarge of a Na-ion Cell

Cell A3PC765: 4.2 - 0 V at C/2
After Overdischarge Cycle

Full Cell Voltage
Cathode Potential
Anode Potential

Y-axis: Voltage (V) or Potential (V $vs$ Na/Na$^+$)

X-axis: Cell Capacity (mAh/g$_{cathode}$)

FIGURE 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016027082 A1
- WO 2020240290 A1
- WO 2020240209 A1

**Non-patent literature cited in the description**

- Thermal Stability of High Power 26650-Type Cylindrical Na-Ion batteries. *Chin.Phys.Lett.*, 2021, vol. 38 (7), 076501